(19) Europäisches Patentamt
European Patent Office
Office européen des brevets

(11) **EP 4 462 925 A1**

(12) **EUROPEAN PATENT APPLICATION**
published in accordance with Art. 153(4) EPC

(43) Date of publication:
**13.11.2024 Bulletin 2024/46**

(21) Application number: **23740042.9**

(22) Date of filing: **11.01.2023**

(51) International Patent Classification (IPC):
**H04W 72/21** (2023.01)      **H04L 25/02** (2006.01)

(52) Cooperative Patent Classification (CPC):
**H04L 25/02; H04W 52/14; H04W 72/21**

(86) International application number:
**PCT/CN2023/071762**

(87) International publication number:
**WO 2023/134700 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2022 CN 202210029081
11.02.2022 CN 202210130408**

(71) Applicant: **Huawei Technologies Co., Ltd.
Shenzhen, Guangdong 518129 (CN)**

(72) Inventor: **LI, Junyao
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **COMMUNICATION METHOD AND COMMUNICATION APPARATUS**

(57)    This application discloses a communication method and a communication apparatus. The method includes: A terminal device receives first information, determines a first transmit power adjustment value for a first uplink transmission in a first TDW based on a first power control loop, and determines a second transmit power adjustment value for a second uplink transmission in a second TDW based on a second power control loop, where the first information is used to enable the terminal device to perform joint channel estimation; and the first TDW and the second TDW partially or fully overlap, and the first power control loop and the second power control loop are different. In this solution, a TPC command corresponding to a power control loop corresponding to an uplink transmission takes effect after a corresponding TDW. For example, a TPC command corresponding to the first uplink transmission takes effect after the first TDW, and a TPC command corresponding to the second uplink transmission takes effect after the second TDW. This ensures performance of joint channel estimation as much as possible.

FIG. 9

**Description**

**CROSS-REFERENCE TO RELATED APPLICATIONS**

This application claims priorities to Chinese Patent Application No. 202210029081.2, filed with the China National Intellectual Property Administration on January 11, 2022 and entitled "COMMUNICATION METHOD AND COMMUNICATION APPARATUS", and to Chinese Patent Application No. 202210130408.5, filed with the China National Intellectual Property Administration on February 11, 2022 and entitled "COMMUNICATION METHOD AND COMMUNICATION APPARATUS", both of which are incorporated herein by reference in their entireties.

**TECHNICAL FIELD**

This application relates to the field of communication technologies, and in particular, to a communication method and a communication apparatus.

**BACKGROUND**

Joint channel estimation (joint channel estimation, JCE) can be used to enhance coverage. Joint channel estimation is essentially channel estimation performed by using reference signals on a plurality of transmissions (or time units). In joint channel estimation, power consistency and phase continuity are required to be maintained when a device sends the plurality of transmissions, so that a receiving side can perform channel estimation by using the reference signals on the plurality of transmissions. For each transmission, the device determines a configured time domain window (also referred to as a nominal time domain window), and determines an actual time domain window in the configured time domain window. When an event that causes power consistency and phase continuity not to be maintained occurs, the actual time domain window ends.

A power used by the device for a transmission is adjusted based on each transmission occasion (transmission occasion, TO), for example, a transmit power may be adjusted according to a transmit power control (transmit power control, TPC) command. One nominal time domain window may include one or more transmission occasions. Power consistency and phase continuity are required to be maintained in the plurality of transmissions in joint channel estimation, that is, the TPC command is not expected to take effect in the time domain window in joint channel estimation. However, if the TPC command is not used, that is, the TPC command is discarded, system performance is poor. Therefore, the TPC command in the time domain window can be allowed to take effect after the time domain window, that is, the TPC command in the time domain window takes effect after the time domain window.

For the configured time domain window, on a premise that the TPC command in the configured time domain window is allowed to take effect after the configured time domain window, when a plurality of TDWs are related, a problem of how to determine a power for an uplink transmission needs to be resolved.

**SUMMARY**

This application provides a communication method and a communication apparatus, to specify a transmit power for an uplink transmission, and meet a requirement of joint channel estimation.

According to a first aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information, determines a first transmit power adjustment value for a first uplink transmission in a first TDW based on a first power control loop, and determines a second transmit power adjustment value for a second uplink transmission in a second TDW based on a second power control loop, where the first information is used to enable the terminal device to perform joint channel estimation; and the first TDW and the second TDW partially or fully overlap, and the first power control loop and the second power control loop are different. In this solution, it is specified that when TDWs corresponding to different uplink transmissions overlap, different power control loops are configured for the different uplink transmissions. For example, the first uplink transmission is configured with the first power control loop, and the second uplink transmission is configured with the second power control loop. In this solution, a TPC command corresponding to a power control loop corresponding to an uplink transmission takes effect after a corresponding TDW. For example, a TPC command corresponding to the first uplink transmission takes effect after the first TDW, and a TPC command corresponding to the second uplink transmission takes effect after the second TDW, so that TPC adjustment for different transmissions with different power control loops does not affect each other. This avoids power control chaos caused by overlapping of a plurality of TDWs, and ensures performance of joint channel estimation as much as possible.

According to a second aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information and second information, and determines to use a TPC command after a first moment, where the first information is used to enable the terminal device to perform j oint channel estimation, and the TPC command is carried in the second information; the first moment is an end moment of a latest end TDW in a first TDW and a second TDW; and the first TDW and the second TDW partially or fully overlap, the first TDW corresponds to a first uplink transmission, and the second TDW corresponds to a second uplink transmission. In this solution, it is specified that when TDWs corresponding to a plurality of uplink transmissions overlap, the TPC command takes effect at an end moment of a latest end TDW in the plurality of TDWs corresponding to the plurality of uplink transmissions. This avoids, as much as possible, causing power consistency in each TDW not to be maintained, and ensures performance of joint channel estimation.

In a possible implementation of the second aspect, the TPC command is received between a second moment and a third moment, the second moment is located before a first transmission occasion in the first TDW and the second TDW, and is separated from the first transmission occasion by first preset duration, the third moment is located before a last transmission occasion in the first TDW and the second TDW, and is separated from the last transmission occasion by second preset duration. That is, the TPC command received by the terminal device between the second moment and the third moment is used after the first moment. In other words, the TPC command received by the terminal device between the second moment and the third moment takes effect after the first moment.

According to a third aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information and second information, and determines to use a TPC command after a first moment, where the first information is used to enable the terminal device to perform j oint channel estimation, and the TPC command is carried in the second information; the first moment is a start moment at which a first TDW and a second TDW overlap, and the first TDW and the second TDW partially or fully overlap; the first TDW corresponds to a first uplink transmission, and the second TDW corresponds to a second uplink transmission; and the first uplink transmission ends at a second moment, and the second moment is a start moment of the second uplink transmission. That the first uplink transmission ends at the start moment of the second uplink transmission may be understood as that the first uplink transmission is terminated in advance by the second uplink transmission. In this solution, it is specified that when TDWs corresponding to different uplink transmissions overlap, when the first uplink transmission is terminated in advance by the second uplink transmission, the first TDW corresponding to the first uplink transmission ends earlier than the start moment of the second TDW. It may be considered that termination in advance is an end condition of the TDW corresponding to the first uplink transmission, or it may be considered that the determined TDW corresponding to the first uplink transmission ends earlier. In this solution, TDWs corresponding to a plurality of uplink transmissions may not overlap, so that a TPC command corresponding to each TDW is delayed to take effect after the TDW. This can ensure power consistency in each TDW to be maintained, that is, ensure performance of joint channel estimation.

In a possible implementation of the third aspect, the TPC command is received between a third moment and a fourth moment, the third moment is located before a first transmission occasion in the first TDW, and is separated from the first transmission occasion by first preset duration, the fourth moment is located before a last transmission occasion before the second moment, and is separated from the last transmission occasion by second preset duration. That is, the TPC command received by the terminal device between the third moment and the fourth moment is used after the first moment. In other words, the TPC command received by the terminal device between the third moment and the fourth moment takes effect after the first moment.

In possible implementations of the second aspect and the third aspect, when the first uplink transmission and the second uplink transmission correspond to a same power control loop, the terminal device determines to use the TPC command after the first moment. In other words, when a same power control loop is configured for the first uplink transmission and the second uplink transmission, the terminal device determines to use the TPC command after the first moment.

According to a fourth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information and second information, where the first information is used to enable the terminal device to perform joint channel estimation, and the second information carries a TPC command; and if the terminal device has a capability of supporting restarting a TDW, the terminal device determines that a first time domain window TDW ends on a symbol before a first event, where the first TDW is for joint channel estimation; or if the terminal device does not have a capability of restarting a TDW, the terminal device uses the TPC command after a first TDW, where the first TDW is for joint channel estimation.

According to a fifth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information, and determines a transmit power adjustment value at a first transmission occasion in a first TDW and/or a transmit power adjustment value at a second transmission occasion after the first time domain window based on a first power control adjustment value and a second power control adjustment value. Optionally, the second transmission occasion is a first transmission occasion after the first TDW. The first information is used to enable the terminal device to perform joint channel estimation, and the first TDW is for joint channel estimation. The first power control adjustment value is a power adjustment value corresponding to a first TPC command, the second power control adjustment value is a power adjustment value corresponding to a second TPC command, the first TPC command is a TPC command for all terminal devices, and the second TPC command is a TPC command for a specific terminal device.

In a possible implementation, a first power control adjustment value at the second transmission occasion is

$$f_i^1 = f_{i_1}^1 + \sum \delta_i, \quad f_{i_1}^1$$ is a power adjustment value at a start transmission occasion in the first TDW, $\Sigma \delta_i$ is a sum of transmit power adjustment values corresponding to TPC commands received in a third time domain range, and the third time domain range is a time domain range from first preset duration before a first symbol in the first TDW to second preset duration before the second transmission occasion.

In a possible implementation, a first power adjustment value at the first transmission occasion is equal to a first power adjustment value at the start transmission occasion in the first TDW in which the first transmission occasion is located.

In a possible implementation, the first transmission occasion and the start transmission occasion in the first TDW in which the first transmission occasion is located are different transmission occasions.

According to a sixth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information, and determines that a first time domain window TDW ends in a symbol before a first event, where the first information is used to enable the terminal device to perform joint channel estimation, and the first TDW is for joint channel estimation; and the first event may include: droppings of some transmissions or a cancellation of a transmission of uplink transmissions in the first TDW due to a processing conflict. Optionally, a symbol for the uplink transmission in the first TDW overlaps a symbol for a downlink transmission. For another example, an overlapping of a gap (gap) between two uplink transmissions in the first TDW and a symbol for a downlink transmission is included. Optionally, when there is the overlapping of the gap (gap) between the two uplink transmissions in the first TDW and the symbol for the downlink transmission, a symbol for the uplink transmission does not overlap the symbol for the downlink transmission. In this solution, the first event is an event that causes power consistency and phase continuity not to be maintained. In this solution, if the first event occurs in the first TDW, the first TDW ends in advance. This can ensure, as much as possible, power consistency and phase continuity to be maintained in one TDW, align a start location and an end location of the TDW between a network device and the terminal device, and ensure joint channel estimation.

It may be understood that the first TDW may alternatively end at a last symbol of the uplink transmission before the first event. For example, if there is a gap between the symbol for the uplink transmission in the first TDW and a start symbol of the first event, the first TDW may alternatively end at the last symbol of the uplink transmission before the first event. For half-duplex frequency division duplex (half-duplex frequency division duplex, HD-FDD), an uplink symbol is located in an uplink frequency band, and a downlink symbol is located in a downlink frequency band. That an uplink symbol overlaps a symbol for a downlink transmission means that the uplink symbol overlaps the symbol for the downlink transmission in time domain.

In a possible implementation of the sixth aspect, the uplink transmission includes one or more of the following transmissions: a physical uplink control channel repetition, a physical uplink shared channel repetition, one transmission block transmission over multiple slots, or one transmission block transmission over multiple slots repetition, where the physical uplink shared channel repetition includes a repetition type A and/or a repetition type B.

In a possible implementation, the downlink transmission includes downlink reception, and/or the downlink transmission includes downlink monitoring.

In a possible implementation, the downlink monitoring includes one or more of monitoring a synchronization signal, monitoring a control information resource set, or monitoring physical downlink control channel search space.

In a possible implementation, the downlink reception includes receiving one or more of a physical downlink shared channel, a physical downlink control channel, or a downlink reference signal.

In a possible implementation of the aspect, a duplex manner of the terminal device is half-duplex frequency division duplex.

According to a seventh aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information, determines a first transmit power adjustment value for a first uplink transmission in a first TDW based on a first power control loop, and determines a second transmit power adjustment value for a second uplink transmission in the first TDW based on a second power control loop, where the first information is used to enable the terminal device to perform joint channel estimation, and the first power control loop and the second power control loop are different. In this solution, for a plurality of transmissions in one TDW, it is specified that different power control loops may be configured for different uplink transmissions. For example, the first uplink transmission is configured with the first power control loop, and the second uplink transmission is configured with the second power control loop. In this solution, transmit power adjustment values for uplink transmissions are determined according to TPC commands including corresponding power control loops, and TPC command power adjustment corresponding to the uplink transmissions does not affect each other. This can avoid an incorrect TPC command used in the uplink transmission, ensure power consistency to be maintained in the TDW, and ensure performance of joint channel estimation.

According to an eighth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information and second information, and determines, according to a first rule, a first transmit power adjustment value for a first uplink transmission in a first TDW, a second transmit power adjustment value for a second uplink transmission in the first TDW, and a third transmit power adjustment value after the first TDW, where the first information is used to enable the terminal device to perform joint channel estimation, and the second information includes a first TPC command. The first rule is as follows: In the first TDW, transmit power adjustment values of transmission occasions before a first transmission occasion of the second uplink transmission are equal; or in the first TDW, transmit power adjustment values of a first transmission occasion of the second uplink transmission and transmission occasions after the first transmission occasion are determined according to the first TPC command and/or a second TPC command received in a first time domain range. The third transmit power adjustment value is determined according to the first TPC command and/or a second TPC command received in a second time domain range. The first time domain range is a time domain range from first preset duration before the first transmission occasion in the first TDW to second preset duration before the first transmission occasion of the second uplink transmission. The second time domain range is a time domain range from the second preset duration before the first transmission occasion of the second uplink transmission to third preset duration before a transmission occasion after the first TDW. Optionally, the first preset duration, the second preset duration, and the third preset duration may be predefined, preconfigured, or indicated by an access network device. The first preset duration, the second preset duration, and the third preset duration are equal, for example, a length of k symbols.

In the solution provided in the eighth aspect, for a plurality of transmissions in one TDW, a rule for determining a transmit power control adjustment value for each uplink transmission in the TDW and a power control adjustment value after the TDW, namely, the first rule, is specified. The first rule can be used to avoid an incorrect TPC command used in the uplink transmission, ensure power consistency to be maintained in the TDW, and ensure performance of joint channel estimation.

According to a ninth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives first information and second information, and determines, according to a second rule, a first transmit power adjustment value for a first uplink transmission in a first TDW, a second transmit power adjustment value for a second uplink transmission in the first TDW, and a third transmit power adjustment value at a transmission occasion after the first TDW, where the first information is used to enable the terminal device to perform joint channel estimation, and the second information includes a first TPC command. The second rule is as follows: In the first TDW, transmit power adjustment values of transmission occasions before a first transmission occasion of the second uplink transmission are equal; or in the first TDW, transmit power adjustment values of a first transmission occasion of the second uplink transmission and transmission occasions after the first transmission occasion are determined according to the first TPC command, where the first TPC command is a UE-specific TPC command associated with the second uplink transmission. The third transmit power adjustment value is determined according to the first TPC command, where the first TPC command is a last TPC command belonging to a transmission occasion in the first TDW.

In the solution provided in the ninth aspect, for a plurality of transmissions in one TDW, a rule for determining a transmit power control adjustment value for each uplink transmission in the TDW and a power control adjustment value after the TDW, namely, the second rule, is specified. The second rule can be used to avoid an incorrect TPC command used in the uplink transmission, ensure power consistency to be maintained in the TDW, and ensure performance of joint channel estimation.

Optionally, the first uplink transmission and the second uplink transmission correspond to a same power control loop, and the terminal device determines one or more of the first transmit power control adjustment value, the second transmit power adjustment value, and the third transmit power adjustment value according to a first rule or the second rule. It may be understood that the same power control loop is configured for the first uplink transmission and the second uplink transmission, and the terminal device may determine a transmit power adjustment value according to the first rule or the second rule.

In a possible implementation of the eighth aspect, if a TPC accumulation command is configured, that is, a higher-layer parameter tpc-Accumulation is not provided, for a physical downlink shared channel, the terminal device determines one or more of the first transmit power control adjustment value, the second transmit power adjustment value, and the third transmit power adjustment value according to the first rule. For a physical downlink control channel, the terminal device determines one or more of the first transmit power control adjustment value, the second transmit power adjustment value, and the third transmit power adjustment value according to the first rule.

In a possible implementation of the ninth aspect, if a TPC accumulation command is not configured, that is, a higher-layer parameter tpc-Accumulation is provided, for a physical downlink shared channel, the terminal device determines one or more of the first transmit power control adjustment value, the second transmit power adjustment value, and the third transmit power adjustment value according to the second rule.

According to a tenth aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device determines a first nominal TDW based on first information, where the first information is used to enable the terminal device to perform joint channel estimation and/or the first information indicates a length of the first nominal TDW, the first information is included in first radio resource control (radio resources control, RRC) signaling; the terminal device receives second RRC signaling, where the second RRC signaling includes second information, the second information indicates information for enabling the terminal device to perform joint channel estimation and/or a length of a second nominal TDW, and effective time of the second RRC signaling is within the first nominal TDW; and the terminal device determines effective time of the second information and/or an end location of the first nominal TDW. It may be understood that the terminal device may re-determine an end location of a nominal TDW and/or determine effective time for enabling joint channel estimation based on a case whether a length of the nominal TDW changes and/or whether an enabling state of joint channel estimation changes. This ensures performance of joint channel estimation as much as possible.

In a possible implementation of the tenth aspect, the second information is used to disable the terminal device from performing joint channel estimation, that is, the terminal device changes from enabling joint channel estimation to disabling joint channel estimation. This meets any one of the following: The effective time of the second information is the effective time of the second RRC signaling; or the second information takes effect after the first nominal TDW ends, and the second RRC signaling is an end event in an actual time domain window; or the second information takes effect after first preset duration after the second RRC signaling. In this solution, that the second information takes effect at the effective time of the second RRC signaling may be considered that the first TDW ends in advance at a location in which the RRC signaling takes effect. This can ensure performance of joint channel estimation before the RRC signaling in the first TDW. That the second RRC signaling is the end event in the actual time domain window, and the second information takes effect after the first nominal TDW ends is that the first TDW does not end in advance, and power consistency and phase continuity do not need to be maintained after a location in which the second information takes effect. This can align a signaling effective location and a start/end location for joint channel estimation between the terminal device and a network device, and ensure performance of joint channel estimation in the first TDW. The second information takes effect after the first preset duration after the second RRC signaling, and specific time is reserved for the signaling to take effect and the terminal device to perform software and hardware configuration. This aligns a signaling effective location and a start/end location for joint channel estimation between the terminal device and a network device, and can avoid reducing performance of joint channel estimation due to inconsistent effective time of the second information.

In a possible implementation of the tenth aspect, the length of the second nominal TDW indicated by the second information is different from the length of the first nominal TDW, and any one of the following is met: the second information takes effect after second preset duration after the second RRC signaling; or the effective time of the second information is the effective time of the second RRC signaling. In this solution, when a TDW changes, the effective time of the second information is specified. This can avoid reducing performance of joint channel estimation due to inconsistent effective time of the second information.

In a possible implementation of the tenth aspect, at a location in which the second RRC signaling takes effect, a TPC accumulation value is reset to 0.

According to an eleventh aspect, a communication method is provided. The method may be performed by a first communication apparatus. The first communication apparatus may be a communication device, for example, a terminal device, or a communication apparatus, for example, a chip system, that can support the communication device to implement a function required by the method. Descriptions are provided below by using an example in which the communication device is a terminal device. The method includes:

The terminal device receives third RRC signaling, where the third RRC signaling includes third information, and the third information is used to disable the terminal device from performing joint channel estimation;

the terminal device performs a first uplink transmission based on the third RRC signaling;
the terminal device receives fourth RRC signaling, where the fourth RRC signaling includes fourth information, the fourth information is used to enable the terminal device to perform joint channel estimation, and effective time of the fourth RRC signaling is within the first uplink transmission; and
the terminal device determines a start location of a nominal TDW and/or effective time of the fourth information based on the fourth RRC signaling.

In a possible implementation of the eleventh aspect, the start location of the nominal TDW is the effective time of the fourth RRC signaling; or the start location of the nominal TDW is an end location of third preset duration after the fourth RRC signaling.

In a possible implementation of the eleventh aspect, at a location in which the fourth RRC signaling takes effect, a TPC accumulation value is reset to 0.

According to a twelfth aspect, an embodiment of this application provides a communication apparatus. The communication apparatus has a function of implementing behavior in method embodiments in one or more of the first aspect to the eleventh aspect. For beneficial effect, refer to the descriptions of the first aspect to the eleventh aspect. Details are not described herein again. The communication apparatus may be the terminal device in the first aspect to the eleventh aspect, or the communication apparatus may be an apparatus that can implement the method provided in at least one of the first aspect to the eleventh aspect, for example, a chip or a chip system.

In a possible design, the communication apparatus includes a corresponding means (means) or module configured to perform the method in at least one of the first aspect to the eleventh aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method example in at least one of the first aspect to the eleventh aspect. For details, refer to detailed descriptions in the method example. Details are not described herein again.

According to a thirteenth aspect, an embodiment of this application provides a communication apparatus. The communication apparatus may be the communication apparatus in at least one of the first aspect to the ninth aspect in the foregoing embodiments, or a chip or a chip system in the communication apparatus in at least one of the first aspect to the eleventh aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device in the foregoing method embodiments.

According to a fourteenth aspect, an embodiment of this application provides a communication apparatus. The communication apparatus includes an input/output interface and a logic circuit. The input/output interface is configured to input and/or output information. The logic circuit is configured to perform the method according to at least one of the first aspect to the eleventh aspect.

According to a fifteenth aspect, an embodiment of this application provides a chip system. The chip system includes a processor, and may further include a memory and/or a communication interface, configured to implement the method in one or more of the first aspect to the eleventh aspect. In a possible implementation, the chip system further includes the memory, configured to store a computer program. The chip system may include a chip, or may include a chip and another discrete component.

According to a sixteenth aspect, an embodiment of this application provides a communication system. The communication system includes the communication apparatus according to the twelfth aspect and an access network device.

According to a seventeenth aspect, this application provides a computer-readable storage medium. The computer-readable storage medium stores a computer program, and when the computer program is run, the method in one or more of the first aspect to the eleventh aspect is implemented.

According to an eighteenth aspect, a computer program product is provided. The computer program product includes computer program code, and when the computer program code is run, the method in one or more of the first aspect to the eleventh aspect is performed.

For beneficial effect of the twelfth aspect to the eighteenth aspect and implementations thereof, refer to descriptions of beneficial effect of the first aspect to the eleventh aspect and implementations thereof.

**BRIEF DESCRIPTION OF DRAWINGS**

FIG. 1 is a diagram of a network architecture to which an embodiment of this application is applicable;
FIG. 2 is a diagram including three nominal TDWs;
FIG. 3 is a diagram in which TWDs respectively corresponding to two transmissions (one transmission preempts the other transmission) partially overlap and fully overlap;
FIG. 4 is a diagram in which TWDs respectively corresponding to two transmissions (the two transmissions are alternately transmitted) partially overlap and fully overlap;
FIG. 5 is a diagram in which TWDs respectively corresponding to two transmissions (one transmission is terminated in advance by the other transmission) partially overlap and fully overlap;
FIG. 6 is a diagram in which one transmission preempts another transmission in a same TDW;
FIG. 7 is a diagram in which two transmissions are alternately transmitted in a same TDW;
FIG. 8 is a diagram in which one transmission is terminated in advance by another transmission in a same TDW;
FIG. 9 is a schematic flowchart of a first communication method according to an embodiment of this application;
FIG. 10 is a diagram of effective time of a TPC command when a first nominal TDW and a second nominal TDW fully overlap;
FIG. 11 is a diagram of effective time of a TPC command when a first nominal TDW and a second nominal TDW partially overlap;
FIG. 12 is a schematic flowchart of a second communication method according to an embodiment of this application;
FIG. 13 is a diagram of effective time of TPC commands for two uplink transmissions in a first TDW;
FIG. 14 is a diagram of HD-FDD;
FIG. 15 is a schematic flowchart of a third communication method according to an embodiment of this application;
FIG. 16 is a schematic flowchart of a fourth communication method according to an embodiment of this application;
FIG. 17 is a schematic flowchart of a fifth communication method according to an embodiment of this application;
FIG. 18 is a diagram of a structure of a communication apparatus according to an embodiment of this application; and
FIG. 19 is another diagram of a communication apparatus according to an embodiment of this application.

**DESCRIPTION OF EMBODIMENTS**

Technical solutions provided in this application are applied to various communication systems, for example, a 5th generation (5th generation, 5G) communication system, a new radio (new radio, NR) system, a long term evolution (long term evolution, LTE) system, an LTE and 5G hybrid system, internet of things (internet of things, IoT), or narrowband internet of things (narrow band internet of things, NB-IoT). The 5G communication system in this application may include at least one of a non-standalone (non-standalone, NSA) 5G communication system and a standalone (standalone, SA) 5G communication system. The communication system may alternatively be a public land mobile network (public land mobile network, PLMN), a device-to-device (device-to-device, D2D) network, a machine to machine (machine to machine, M2M) network, or another network.

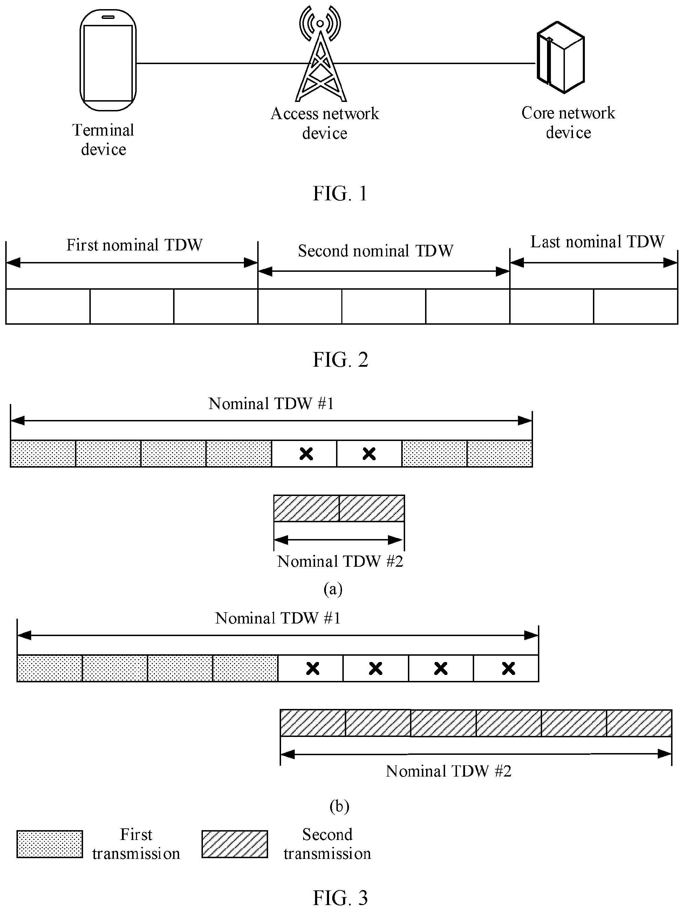

FIG. 1 is a diagram of an example of an architecture of a communication system to which an embodiment of this application is applicable. The communication system may include a core network device, a network device, and at least one terminal device. As shown in FIG. 1, an example in which the at least one terminal device is one terminal device is used. The terminal device is connected to the network device in a wireless manner, and the network device is connected to the core network device in a wireless manner or a wired manner. The core network device and the network device may be different physical devices that are independent of each other; or functions of the core network device and logical functions of the network device are integrated into a same physical device; or some functions of the core network device and some functions of the network device are integrated into a same physical device. It should be noted that FIG. 1 is merely an example. Quantities of core network devices, network devices, and terminal devices included in the mobile communication system are not limited in embodiments of this application. In some embodiments, the communication system may further include another network device, for example, a wireless relay device or a wireless backhaul device.

The network device is an access device, for example, includes a radio access network (radio access network, RAN) device, like a base station (for example, an access point), used by the terminal device to access the mobile communication system in a wireless manner. The network device may alternatively be a device that communicates with the terminal over an air interface, for example, another possible terminal apparatus. For another example, in a V2X technology, the network device is a road side unit (road side unit, RSU). The base station may be configured to mutually convert a received over-the-air frame and an internet protocol (internet protocol, IP) packet and serve as a router between the terminal and a remaining part of the radio access network. The remaining part of the radio access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (evolved NodeB) in a long term evolution (long term evolution, LTE) system or a long term evolution-advanced (long term evolution-advanced, LTE-A) system, and may alternatively be referred to as an (eNB or an e-NodeB) for short; or may include a next generation NodeB (next generation NodeB, gNB) in a 5G NR system, or may include an access node in a wireless fidelity (wireless fidelity, Wi-Fi) system. Alternatively, the network device may be a relay station, a vehicle-mounted device, a future evolved public land mobile network (Public Land Mobile Network, PLMN) device, a device in a device-to-device (device-to-device, D2D) network, a device in a machine to machine (machine to machine, M2M) network, a device in an IoT network, or the like. A specific technology and a specific device form that are used by a wireless network device are not limited in embodiments of this application. For example, the network device in FIG. 1 may be a base station, and corresponds to different devices in different systems. For example, the network device in FIG. 1 may correspond to an eNB in a fourth generation (the fourth generation, 4G) mobile communication technology system, and correspond to a gNB in a 5G system.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be another division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by a UE may be sent to the CU through the DU. The DU may directly transparently transmit the signaling to the UE or the CU through protocol layer encapsulation without parsing the signaling. In the network architecture, the CU is used as a network device on a RAN side. In addition, the CU may be used as a network device on a core network (core network, CN) side. This is not limited in this application.

The core network device includes, for example, an access and mobility management function (access and mobility management function, AMF) or a user plane function (user plane function, UPF). It should be noted that the core network device is also a network device. Because embodiments of this application mainly relate to an access network device, the network device below is an access network device unless otherwise specified.

In embodiments of this application, an apparatus configured to implement a function of the network device may be a network device, or may be an apparatus, for example, a chip system, that can support the network device to implement the function. The apparatus may be installed in the network device. In the technical solutions provided in embodiments of this application, an example in which the apparatus configured to implement the function of the network device is a network device is used for describing the technical solutions provided in embodiments of this application.

The terminal device is a device that has a wireless transceiver function, and may send a signal to the network device, or receive a signal from the network device. The terminal device may be referred to as user equipment (user

9

equipment, UE), or sometimes may be referred to as a terminal, an access station, a UE station, a remote station, a wireless communication device, a user apparatus, or the like. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearable, smart transportation, a smart city (smart city), an uncrewed aerial vehicle, and a robot. The terminal device in embodiments of this application may be a mobile phone (mobile phone), a tablet computer (Pad), a computer with a wireless transceiver function, a VR terminal, an AR terminal, a wireless terminal in industrial control (industrial control), a wireless terminal in self-driving (self-driving), a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. By way of example, and not limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The terminal device may further include a relay (relay). For example, the terminal device may be customer-premises equipment (customer-premises equipment, CPE). The CPE may receive a signal from the network device, and forward the signal to another terminal device. Alternatively, it is understood that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). In addition, in embodiments of this application, the terminal device may be an apparatus configured to implement a function of a terminal, or may be an apparatus, for example, a chip system, that can support the terminal device to implement the function. The apparatus may be installed in the terminal device. For example, the terminal device may alternatively be a vehicle detector. In embodiments of this application, a chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

To facilitate understanding of the technical solutions provided in embodiments of this application, some technical terms in embodiments of this application are first explained and described.

(1) Joint channel estimation is mainly for a receiving device (an access network device is used as an example in this specification), and means that the access network device performs channel estimation based on reference signals received in a plurality of transmissions (time units). For the access network device, joint channel estimation is also referred to as cross-slot channel estimation, cross-transmission channel estimation, or coherent channel estimation. A reference signal, also referred to as a "pilot" signal, is a known signal provided by a transmitting end for a receiving end for channel estimation or channel sounding, and is used for channel estimation, channel quality measurement, and the like. The reference signal may include an uplink reference signal and a downlink reference signal. For example, the uplink reference signal refers to a signal sent by a terminal device to an access network device, and the downlink reference signal refers to a signal sent by an access network device to a terminal device. The uplink reference signal may include a demodulation reference signal (demodulation reference signal, DMRS), a channel sounding reference signal (sounding reference signal, SRS), and the like. The downlink reference signal mainly includes a channel state information (channel state information, CSI) reference signal, a channel state information-reference signal (channel state information-reference signal, CSI-RS), and the like. Joint channel estimation in this specification is mainly for an uplink reference signal. Therefore, unless otherwise specified, the reference signal in this specification refers to the uplink reference signal. In addition, in embodiments of this application, that the reference signal is a DMRS is used as an example, and the reference signal may be used to demodulate a physical uplink control channel (physical uplink control channel, PUCCH), and a physical uplink shared channel (physical downlink shared channel, PUSCH). Joint channel estimation may also be referred to as DMRS bundling. Correspondingly, for a sending device (a terminal device is used as an example in this specification), joint channel estimation may be referred to as joint sending, joint transmission, DMRS bundling, cross-slot transmission, coherent transmission, or the like.

For ease of description, the following uses DMRS bundling as an example of joint channel estimation. DMRS bundling may be for an uplink channel transmission, for example, a same transmission block (transmission block, TB) PUSCH repetition transmission, a transmission between different TBs, one TB transmission over multi-slot (TB processing over multi-slot, TBoMS), or TBoMS repetitions. An access network device may configure (enable or disable) DMRS bundling by using radio resource control (radio resource control, RRC) signaling. For example, when configuring, by using the RRC signaling, to enable (enable) DMRS bundling, the access network device may configure a higher-layer parameter PUSCH-DMRS-Bundling or PUCCH-DMRS-Bundling included in the RRC signaling as "enable". For another example, when configuring, by using the RRC signaling, to disable (disable) DMRS bundling, the access network device may configure a higher-layer parameter PUSCH-DMRS-Bundling or PUCCH-DMRS-Bundling included in the RRC signaling as "disable"; or the RRC signaling does not include a higher-layer parameter PUSCH-DMRS-Bundling or PUCCH-DMRS-Bundling, and DMRS bundling is disabled by default. DMRS bundling requires that the terminal device sends the reference signals with a consistent power, and phases of the reference signals are continuous, so that the access network device can perform joint channel estimation by using a plurality of DMRSs.

A repetition (repetition) in this application indicates a quantity of transmission repetitions. For example, when a PUSCH and a PUCCH are transmitted, repetition factors/a quantity of repetitions/a quantity of transmission slots, that is, a quantity of sending repetitions, may be configured by using an RCC or DCI. There are two types of PUSCH repetition: a repetition type A and a repetition type B. The repetition type A indicates that one repetition (repetition) is sent in each slot, and consecutive symbols whose locations and quantity are the same are occupied in each slot. In the PUSCH repetition type A, a configured repetition factor indicates a quantity of transmission slots, and is also equal to a quantity of repetitions. A repetition factor configured in the repetition type B indicates a quantity of nominal repetitions (nominal repetitions). Quantities of symbols allocated to time domain resources of the nominal repetitions are the same, and time domain resources of adjacent nominal repetitions are consecutive. It should be noted that the repetition type B cannot be transmitted through an invalid symbol (invalid symbol), and cannot be transmitted across a slot boundary (slot boundary) due to transmission limitation. The invalid symbol may be one or more predefined symbols. When a nominal repetition in the repetition type B encounters the invalid symbols or the slot boundary, the nominal repetition needs to be divided into an actual repetition (actual repetition) based on the invalid symbols or the slot boundary. For example, if a nominal repetition including seven symbols is transmitted across a slot boundary at a third symbol, the nominal repetition needs to be divided into an actual repetition including three symbols and another actual repetition including four symbols. A PUCCH repetition is similar to the PUSCH repetition type A.

(2) A time domain window (time domain window, TDW) for DMRS bundling may also be understood as a TDW for performing DMRS bundling. It may be understood that DMRS bundling requires that transmit powers of sending devices in the TDW are consistent, and phases of DMRSs are continuous. Optionally, the TDW is divided into a configured time domain window (configured TDW) and an actual time domain window (actual TDW). The configured TDW is also referred to as a nominal time domain window (nominal TDW). The configured TDW is an initial time domain window determined based on a length L configured by an access network device or according to a preset rule. The actual TDW is a time domain window that is determined in the configured TDW and that is actually used for joint channel estimation. The access network device expects a terminal device to maintain power consistency and phase continuity in the actual TDW, so that the access network device can perform DMRS bundling in the actual TDW. Phase continuity is not required to be maintained between different actual TDWs.

TDWs for DMRS bundling vary with manners of sending reference signals by the terminal device. The following uses a PUSCH repetition type A as an example to briefly describe how to determine a TDW for DMRS bundling. It may be understood that, for PUCCH repetitions, for a manner of determining a TDW for DMRS bundling, refer to a manner of determining the TDW for DMRS bundling in the PUSCH repetition type A.

First, a configured TDW is determined. For example, one or more configured TDWs may be determined based on a window length L on a configured time domain resource, where a length of each configured TDW except a last configured TDW is L. A start location of a first configured TDW may be a start location of a DMRS, or may be configured. For example, FIG. 2 is a diagram including three configured TDWs. In FIG. 2, for example, L=3, and a quantity of repetitions=8. As shown in FIG. 2, window lengths of a first configured TDW and a second configured TDW in the three configured TDWs are both 3, and a window length of a last configured TDW is equal to 2.

A unit of L is not limited in embodiments of this application. For example, L may be one or more of L transmissions, L time units, or L repetitions. The time unit may be a slot, a symbol, a second, a millisecond, a microsecond, or the like. L may be configured by an access network device, or may be determined according to a preset rule. For example, the access network device may configure L by using RRC signaling, downlink control information (downlink control information, DCI), or a media access control-control element (medium access control-control element, MAC-CE). For another example, the access network device may configure L by using a higher-layer parameter PUSCH-TimeDomainWindowLength included in RRC signaling. For still another example, the access network device may further configure L by using PUCCH-TimeDomainWindowLength included in RRC signaling. Alternatively, L may be determined according to the preset rule. For yet another example, it may be specified that L is a minimum value of maximum duration and a time domain span for transmitting PUSCH repetitions, that is, L=min (maximum duration, time domain span for transmitting PUSCH repetitions). The maximum duration is a longest time domain span in which power consistency and phase continuity can be maintained when the terminal device performs sending, and may be considered as a capability of the terminal device. The maximum duration may be predefined, or may be reported by the terminal device. A unit of the maximum duration may be a quantity of transmissions, a quantity of repetitions, or a time unit. Optionally, the time unit may be a slot, a symbol, a second, a millisecond, a microsecond, or the like. Optionally, a value of the maximum duration is within a predefined candidate value set.

Then, one or more actual TDWs are determined in each configured TDW. For a PUSCH, an actual TDW is started from a first symbol of a first available slot in each configured TDW for DMRS bundling. The first symbol of the first available slot in each configured TDW may be indicated by time domain resource assignment (time domain resource assignment, TDRA). A start actual TDW ends when an event that causes power consistency and phase continuity not to be maintained occurs. Optionally, the actual TDW ends at an available symbol or a physical symbol before the event occurs. After one actual TDW ends due to the event, the terminal device may restart DMRS bundling, or it may be considered that one actual TDW is restarted. An actual TDW in a configured TDW ends not later than a last symbol of a last available slot for a PUSCH transmission in the configured TDW. The last symbol of the last available slot for the PUSCH transmission may be indicated by the TDRA.

The event that causes power consistency and phase continuity not to be maintained may include one or more of the following: 1. Droppings of some transmissions due to a processing conflict, for example, the access network device modifies a format of a symbol for an uplink transmission to downlink or flexible by using a slot format indicator (slot format Indication, SFI). For another example, a transmission whose priority is higher than that of an uplink transmission occurs on a symbol for the uplink transmission; 2. A DL slot or DL reception/monitoring configured based on time division duplex (time division duplex, TDD) semi-static downlink (downlink, DL)/uplink (uplink, UL) configuration (TDD-UL-DL-Configcommon and/or tdd-UL-DL-ConfigurationDedicated); 3. Another uplink transmission existing between two PUSCH transmissions, and/or another uplink transmission existing between two PUCCH transmissions; 4. A gap between two PUSCH transmissions exceeding 13 symbols, and/or a gap between two PUCCH transmissions exceeding 13 symbols; 5. Timing advance (timing advance, TA) adjustment indicated by the access network device; 6. Uplink beam switching performed at a plurality of transmission points (multi-TRP); and 7. A frequency domain location change due to frequency hopping.

After the actual TDW ends due to the event, the terminal device may determine, based on the event that causes power consistency and phase continuity not to be maintained, whether to restart the actual TDW. For example, if an event is a semi-static event, the terminal device may restart a new actual TDW. It may be understood that the semi-persistent event may include frequency hopping. For another example, if an event is a dynamic event, the terminal device determines, based on a capability of the terminal device, whether to restart a new actual TDW.

A power used by the terminal device for an uplink transmission is adjusted based on each TO. It may also be considered that the terminal device updates a used transmit power in each TO. It may be understood that a PUSCH/-PUCCH/PRACH/SRS transmission occasion i is determined by a slot index $n_{s,f}^{\mu}$ in a frame of a system frame number (system frame number, SFN), a first symbol S for a transmission in a slot, and several consecutive symbols. For a PUSCH repetition transmission type B, a PUSCH transmission occasion is a nominal repetition. How the terminal device updates the transmit power is described below by using PUSCH power control and PUCCH power control as examples.

(3) For PUSCH power control, the terminal device transmits a PUSCH on a bandwidth part (bandwidth part, BWP) b of a carrier f of a serving cell c, and configures, by using a parameter set whose index is j, a power adjustment value for the PUSCH whose index is l. Specifically, the terminal device may determine, according to the following formula, a transmit power at a transmission occasion i for sending the PUSCH:

$$P_{\mathrm{PUSCH},b,f,c}(i,j,q_d,l) =$$
$$\min\left\{\begin{array}{l} P_{\mathrm{CMAX},f,c}(i), \\ P_{\mathrm{O\_PUSCH},b,f,c}(j) + 10\log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{array}\right\}$$

$P_{\mathrm{PUSCH},b,f,c}(i,j,q_d,l)$ represents the transmit power used by the terminal device to send the PUSCH channel on the BWP b of the carrier f of the serving cell c. $P_{\mathrm{CMAX},f,c}(i)$ represents a maximum output power configured at the PUSCH channel transmission occasion i on the carrier f of the serving cell c, and the maximum output power is related to factors such as a sending capability of the terminal device and frequency domain resource assignment of the PUSCH. $P_{\mathrm{O\_PUSCH}b,f,c}(j)$ is a sum of a nominal power $P_{\mathrm{O\_NOMINAL\_PUSCH},f,c}(j)$, and a power budget compensation $P_{\mathrm{O\_UE\_PUSCH},b,f,c}(j)$, and may be configured by using higher-layer signaling. $M_{\mathrm{RB},b,f,c}^{\mathrm{PUSCH}}(i)$ is a bandwidth assigned to a PUSCH resource, and is represented by a quantity of resource blocks (resource blocks, RBs) for PUSCH transmission time. $\alpha_{b,f,c}(j)$ represents a path loss compensation factor of the BWP b of the carrier f of the cell c, and is configured by a higher-layer. $PL_{b,f,c}(q_d)$ is a downlink path loss estimate (downlink pathloss estimate) value in an activated downlink BWP estimated using a reference signal with an index of $q_d$, and a unit is dB. $\Delta_{\mathrm{TF},b,f,c}(i)$ is an adjustment value related to transmitted channel bits per resource element (bits per resource element). $f_{b,c,f}(i,l)$ is a power control adjustment value at the PUSCH transmission occasion i on the BWP b of the carrier f of the serving cell c. $f_{b,c,f}(i,l)$ varies depending on whether a higher-layer parameter *tpc-Accumulation* is configured.

If the higher-layer parameter *tpc-Accumulation* is not configured,

$$f_{b,f,c}(i,l) = f_{b,f,c}(i - i_0, l) + \sum_{m=0}^{\mathcal{C}(D_i)-1} \delta_{\mathrm{PUSCH}b,f,c}(m,l)$$

. $\delta_{\mathrm{PUSCH},b,f,c}(i,l)$ is a value indicated by a TPC command (command), and is indicated by a TPC command field in DCI for scheduling the PUSCH, where the TPC command in the DCI for scheduling the PUSCH may be a TPC command for a specific terminal device. Further, $\delta_{\mathrm{PUSCH},b,f,c}(i,l)$ is a value indicated by a TPC command (command), where the TPC command in DCI for scheduling the PUSCH may be a TPC command for a specific terminal device. Alternatively, $\delta_{\mathrm{PUSCH},b,f,c}(i,l)$ is a value indicated by a TPC command (command), and is indicated by a DCI format 2_2 with cyclic redundancy check (cyclic redundancy check, CRC) scrambled by a TPC-PUSCH-RNTI (radio network temporary identity, radio network temporary identity). It may be understood that, if the higher-layer parameter *tpc-Accumulation* is not configured, accumulation of TCP command indication values is actually configured.

$f_{b,c,f}(i - i_0, l)$ is a power control adjustment value at a PUSCH transmission occasion i - $i_0$. $\sum_{m=0}^{\mathcal{C}(D_i)-1} \delta_{\mathrm{PUSCH},b,f,c}(m,l)$ is a sum of TPC command values in a set U , namely, a sum of TPC command values received by the terminal device between first $K_{\mathrm{PUSCH}}(i-i_0)$-1 symbols on the PUSCH transmission occasion i - $i_0$ and first $K_{\mathrm{PUSCH}}(i-i_0)$-1 symbols on the PUSCH transmission occasion i . $i_0 > 0$ , and $i_0$ is a minimum integer that enables the first $K_{\mathrm{PUSCH}}(i-i_0)$-1 symbols on the PUSCH transmission occasion i - $i_0$ to be located before the first $K_{\mathrm{PUSCH}}(i)$ symbols on the PUSCH transmission occasion i. For $K_{\mathrm{PUSCH}}(i)$, if the PUSCH transmission is scheduled by the DCI, $K_{\mathrm{PUSCH}}(i)$ is a quantity of symbols between a last symbol of the PDCCH corresponding to the DCI and a first symbol of the scheduled PUSCH transmission. Optionally, the scheduled PUSCH transmission is a current PUSCH transmission (namely, a PUSCH transmission corresponding to the transmission occasion i). Optionally, the scheduled PUSCH transmission is a PUSCH transmission corresponding to a first repetition of a current PUSCH transmission. If the PUSCH transmission is configured by ConfiguredGrantConfig, $K_{\mathrm{PUSCH}}$ (i) is a quantity $K_{\mathrm{PUSCH,min}}$ of symbols, and is equal to a product of a quantity of symbols $N_{\mathrm{symb}}^{\mathrm{slot}}$ in each slot and a minimum value indicated by k2 in PUSCH-ConfigCommon. If the transmission occasion $i - i_0$ has reached a maximum transmit power and $\sum_{m=0}^{\mathcal{C}(D_i)-1} \delta_{\mathrm{PUSCH}b,f,c}(m,l) \geq 0$ , $f_{b,f,c}(i,l) = f_{b,f,c}(i-i_0,l)$. Alternatively, if the transmission occasion $i - i_0$ has reached a minimum transmit power and $\sum_{m=0}^{\mathcal{C}(D_i)-1} \delta_{\mathrm{PUSCH}b,f,c}(m,l) \leq 0$ , $f_{b,f,c}(i,l) = f_{b,f,c}(i - i_0, l)$.

If the higher-layer parameter *tpc-Accumulation* is configured, $f_{b,f,c}(i,l) = \delta_{\mathrm{PUSCH},b,f,c}(i,l)$. That is, the value indicated by the TPC command is used, and the value indicated by the TPC command is not accumulated.

(4) For PUCCH power control, the terminal device sends a PUCCH on a BWP b of a carrier .f of a serving cell c, and uses a PUCCH power adjustment value whose index is l. Specifically, the terminal device may determine, according to the following formula, a transmit power $P_{PUCCH,b,f,c}(i,q_u,q_d,l)$ at a transmission occasion i for sending the PUCCH:

$$P_{\mathrm{PUCCH}b,f,c}(i,q_u,q_d,l) = \min \left\{ \begin{array}{l} P_{\mathrm{CMAX},f,c}(i), \\ P_{\mathrm{O\_PUCCH}b,f,c}(q_u) + 10\log_{10}(2^{\mu} \cdot M_{\mathrm{RB},b,f,c}^{\mathrm{PUCCH}}(i)) + PL_{b,f,c}(q_d) + \Delta_{\mathrm{F\_PUCCH}}(F) + \Delta_{\mathrm{TF},b,f,c}(i) + g_{b,f,c}(i,l) \end{array} \right\}$$

For explanations of parameters in the formula, refer to the foregoing manner of determining the transmit power at the transmission occasion i for sending the PUSCH, and the PUSCH may be replaced with the PUCCH. A difference lies in that $g_{b,f,c}(i,l)$ is a power control adjustment value at a PUCCH transmission occasion i on the BWP $b$ of the carrier $f$ of the serving cell *c*, and

$$g_{b,f,c}(i,l) = g_{b,f,c}(i - i_0, l) + \sum_{m=0}^{\mathcal{C}(C_i)-1} \delta_{\mathrm{PUCCH}b,f,c}(m,l)$$

.

$\delta_{\mathrm{PUCCH},b,f,c}(i,l)$ is a TPC command value, and indicated by a TPC command field in DCI for scheduling a PDSCH corresponding to the PUCCH, where the TPC command in the DCI for scheduling the PDSCH corresponding to the PUCCH may be a TPC command for a specific terminal device. Alternatively, $\delta_{\mathrm{PUCCH},b,f,c}(i,l)$ is a TPC command value, and is indicated by a DCI format 2_2 with CRC scrambled by a TPC-PUCCH-RNTI. Optionally, a scheduled PUCCH transmission is a current PUCCH transmission (namely, a PUCCH transmission corresponding to the transmission occasion i). Optionally, a scheduled PUCCH transmission is a PUCCH transmission corresponding to a first repetition of a current PUCCH transmission.

$g_{b,c,f}(i - i_0, l)$ is a power control adjustment value at a PUCCH transmission occasion $i - i_0$.
$$\sum_{m=0}^{\mathscr{C}(C_i)-1} \delta_{\text{PUCCH}b,f,c}(m,l)$$
is a sum of TPC command values in a set $C_i$, namely, a sum of TPC command values received by the terminal device between first $K_{\text{PUCCH}}(i-i_0)$-1 symbols on the PUCCH transmission occasion $i - i_0$ and first $K_{\text{PUCCH}}(i)$ symbols on the PUCCH transmission occasion $i$. $i_0 > 0$, and $i_0$ is a minimum integer that enables the first $K_{\text{PUCCH}}(i-i_0)$-1 symbols on the PUCCH transmission occasion $i - i_0$ to be located before the first $K_{\text{PUCCH}}(i)$ symbols on the PUCCH transmission occasion $i$. For $K_{\text{PUCCH}}(i)$, if the PUCCH transmission is in response to a detected DCI format, $K_{\text{PUCCH}}(i)$ is a quantity of symbols between a last symbol of the PDCCH corresponding to the DCI and a first symbol of the corresponding PUCCH transmission; or if the PUCCH transmission is not in response to a detected DCI format, $K_{\text{PUCCH}}(i)$ is a quantity $K_{\text{PUCCH,min}}$ of symbols, and is equal to a product of a quantity of symbols $N_{\text{symb}}^{\text{slot}}$ of each slot and a minimum value indicated by k2 in PUSCH-ConfigCommon. If the transmission occasion $i$ -$i_0$ has reached a maximum transmit power and
$$\sum_{m=0}^{\mathscr{C}(C_i)-1} \delta_{\text{PUCCH},b,f,c}(m,l) \geq 0$$
, $g_{b,f,c}(i,l) = g_{b,f,c}(i-i_0,l)$. Alternatively, if the transmission occasion $i$ - $i_0$ has reached a minimum transmit power and
$$\sum_{m=0}^{\mathscr{C}(C_i)-1} \delta_{\text{PUCCH},b,f,c}(m,l) \leq 0$$
, $g_{b,f,c}(i,l) = g_{b,f,c}(i-i_0,l)$.

(5) "At least one" means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first TPC command and a second TPC command are merely used to distinguish between different TPC commands, but do not indicate different priorities, importance degrees, or the like of the two TPC commands. In embodiments of this application, "if" and "if" may be replaced, and unless otherwise specified, "when" and "in a case of" may be replaced.

In embodiments of this application, the uplink transmission and the downlink transmission are relative. A transmission from the terminal device to the access network device is referred to as the uplink transmission, and a transmission from the access network device to the terminal device is referred to as the downlink transmission. In a sidelink, the uplink transmission may be, for example, a transmission from a first device to a second device, and relatively a transmission from the second device to the first device is the downlink transmission. Solutions provided in embodiments of this application are applied to a side transmission. In addition, the uplink transmission in embodiments of this application may be a PUSCH, a PUCCH, or a transmission of one TB over multiple slots.

The foregoing describes some technical terms in embodiments of this application. The following describes the technical solutions in embodiments of this application.

In joint channel estimation, power consistency needs to be maintained on reference signals on a plurality of transmissions. When DMRS bundling is enabled, a TPC command cannot be used in a TDW. In other words, a TPC command is not expected to take effect within a TDW for joint channel estimation. In this specification, that TPC takes effect may be understood as that TPC is used, that is, the TPC command is used to determine a transmit power adjustment value or a transmit power. For example, the TPC command takes effect after a first moment, that is, the TPC command is used after a first moment. However, the TPC command in the TDW does not take effect. This greatly limits flexibility of the access network device. Therefore, that a TPC command in a TDW can take effect is proposed, and the TPC command is used as an end event in an actual TDW. However, the TPC command is frequently executed. If the actual TDW is frequently terminated, gains for DMRS bundling decrease. A TPC command that should take effect in a TDW is further delayed, and takes effect after the TDW. In addition, a TPC command that takes effect in each configured TDW is preferably selected, and takes effect after the configured TDW. This conflicts with current power control of the PUSCH and PUCCH. For ease of understanding, the following uses specific scenarios for specific description.

Scenario 1: A plurality of configured TDWs overlap, and this may include one or more of the following cases.

Case 1: One transmission of one UE is preempted by another transmission. For example, a configured grant (configured grant, CG) PUSCH of a UE is preempted by a scheduled dynamic grant (dynamic grant, DG) PUSCH, or a PUCCH of one UE is preempted by another PUCCH, of the UE, with a higher priority. Both the dynamically scheduled PUSCH and the PUCCH with the higher priority include a repetition or a transmission over multiple slots. The preemption means that a current transmission is partially or totally dropped because another transmission overlaps the current transmission in time domain and/or frequency domain. Because a configured TDW is determined for each transmission, that a plurality of configured TDWs may partially or fully overlap may occur. For example, refer to (a) and (b) in FIG. 3. (a) in FIG. 3 shows that sending of two configured TDWs is fully overlapped, and (b) in FIG. 3 shows that sending of two configured TDWs is partially overlapped. A configured TDW #1 corresponds to a first transmission, a configured TDW #2 corresponds to a second transmission, and the second transmission preempts the first transmission.

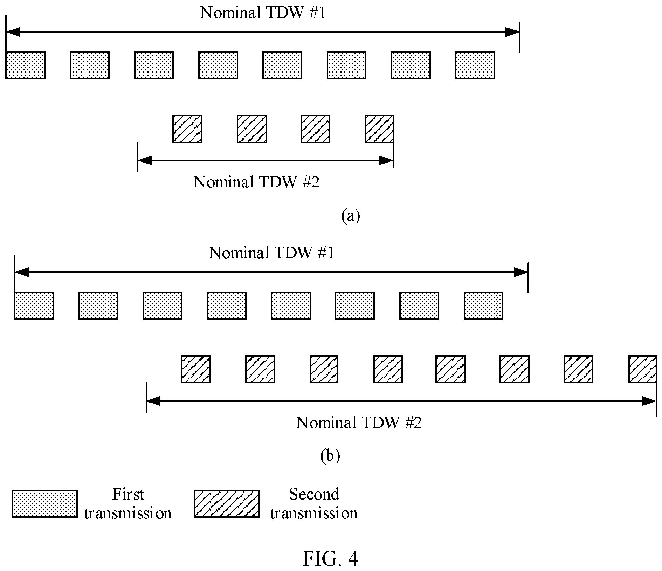

Case 2: Two services of a UE are transmitted alternately. Two transmissions may be a CG PUSCH transmission of the UE and another CG PUSCH transmission; or two transmissions may be a CG PUSCH transmission of the UE and a scheduled DG PUSCH transmission; or two transmissions may be a DG PUSCH transmission of the UE and another scheduled DG PUSCH transmission; or two transmissions may be a PUCCH transmission and another dynamically scheduled PUCCH transmission. The alternate transmission means that the two transmissions are alternately transmitted in time domain. In this case, that a plurality of configured TDWs may partially or fully overlap may occur. For example, refer to (a) and (b) in FIG. 4. (a) in FIG. 4 shows that two configured TDWs are fully overlapped, and (b) in FIG. 4 shows that two configured TDWs are partially overlapped.

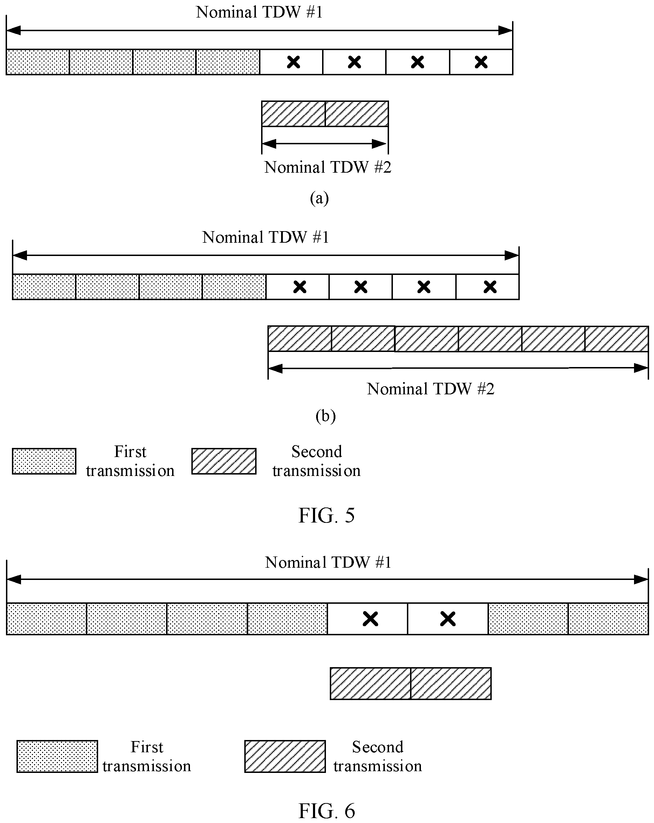

Case 3: If one transmission is terminated in advance by another transmission, it may also be considered that the transmission ends at a start location of the another transmission. For example, a first uplink transmission ends at a start moment of a second uplink transmission, that is, a first uplink transmission is terminated in advance by a second uplink transmission. For example, that a CG PUSCH of one UE is terminated in advance by a scheduled DG PUSCH may be understood that a CG PUSCH repetition transmission after a symbol overlapping with the DG PUSCH starts is canceled, or a subsequent CG PUSCH is canceled starting from a first symbol of a CG PUSCH repetition overlapping with the DG PUSCH. Optionally, hybrid automatic repeat request (hybrid automatic repeat request, HARQ) process numbers of the DG PUSCH and the CG PUSCH are the same. In this case, that a plurality of configured TDWs may partially or fully overlap may occur. For example, refer to (a) and (b) in FIG. 5. (a) in FIG. 5 shows that sending of two configured TDWs is fully overlapped, and (b) in FIG. 5 shows that sending of two configured TDWs is partially overlapped. A configured TDW #1 corresponds to a first transmission, a configured TDW #2 corresponds to a second transmission, and the second transmission preempts the first transmission.

It may be understood that, assuming that the terminal device is enabled to perform joint channel estimation, a TPC command in a configured TDW should take effect after the configured TDW. However, in Scenario 1, that is, when the plurality of configured TDWs partially or fully overlap, when the TPC command takes effect is a problem to be resolved.

Scenario 2: TPC commands may be classified into two types. One type is for one terminal device, and is also referred to as a UE-specific TPC command. The other type is for a plurality of terminal devices, and is also referred to as a common TPC command. The UE-specific TPC command may be carried in a DCI format 0_0/0_1/0_2 for scheduling a PUSCH, or the UE-specific TPC command may be carried in a DCI format 1_0/1_1/1_2 for scheduling a PDSCH corresponding to a PUCCH. The common TPC command may be carried in a DCI format 2_2 with CRC scrambled by a TPC-PUSCH-RNTI or a TPC-PUCCH-RNTI. Because the UE-specific TPC command is carried in DCI for scheduling a PUSCH transmission, the UE-specific TPC command takes effect at the beginning of the corresponding transmission, for example, takes effect at a first transmission occasion of corresponding transmission. For example, in the following cases, the UE-specific TPC command should take effect within a TDW of a current transmission.

Case 1: FIG. 6 is a diagram in which one transmission (for example, a first transmission) of one UE is preempted by another transmission (for example, a second transmission) of the UE. For example, a CG PUSCH of one UE is preempted by a scheduled DG PUSCH. For another example, a PUCCH of one UE is preempted by another PUCCH, of the UE, with a higher priority.

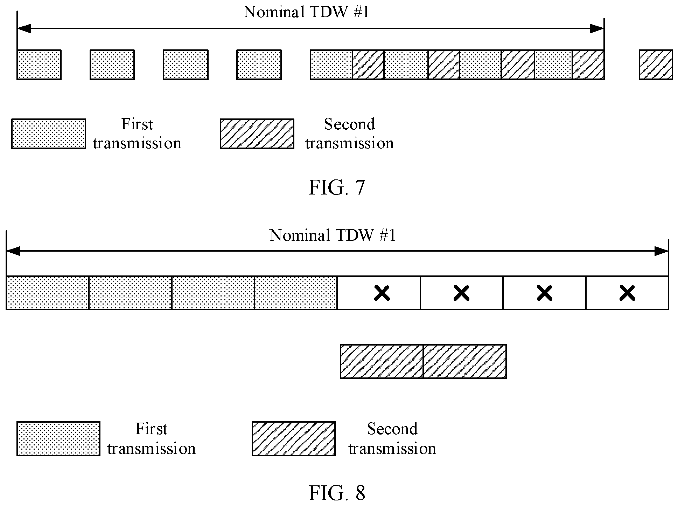

Case 2: FIG. 7 is a diagram in which two transmissions (for example, a first transmission and a second transmission) of one UE are alternately transmitted. The two transmissions may be a CG PUSCH transmission of the UE and another CG PUSCH transmission; or the two transmissions may be a CG PUSCH transmission of the UE and a scheduled DG PUSCH transmission; or the two transmissions may be a DG PUSCH transmission of the UE and another scheduled DG PUSCH transmission; or the two transmissions may be a PUCCH transmission and another dynamically scheduled PUCCH transmission.

Case 3: Refer to FIG. 8. One transmission (for example, a first transmission) of one UE is terminated in advance by another transmission (for example, a second transmission). For example, a CG PUSCH of one UE is terminated in advance by a scheduled DG PUSCH. It may be understood that the CG PUSCH transmission after a symbol overlapping with that of the DG PUSCH starts is canceled.

As shown in FIG. 6 to FIG. 8, the UE-specific TPC command is usually carried in the DCI for scheduling the PUSCH transmission, and the UE-specific TPC command takes effect when the corresponding transmission starts. However, it is proposed that the TPC command takes effect after a nominal TDW. When a higher-layer parameter tpc-Accumulation is not configured, that is, TPC accumulation is performed in each configured TDW, if the UE-specific TPC command is delayed to take effect after the nominal TDW, it is obvious that transmit power control corresponding to the UE-specific TPC command is inaccurate. Alternatively, when a higher-layer parameter tpc-Accumulation is configured, that is, after the configured TDW, a last received TPC command is used. If the last TPC command is the UE-specific TPC command, according to the conventional technology, a UE may use a common TPC command after using the UE-specific TPC command, that is, TPC is used out of order. This causes an inaccurate transmit power determined by the UE and reduces communication performance.

In view of this, the technical solutions in embodiments of this application are provided. In the solutions provided in this application, effective time of a TPC command is specified. This ensures, as much as possible, power consistency to be maintained in an actual TDW, and ensures performance of DMRS bundling.

The following describes in detail the solutions provided in embodiments of this application with reference to the accompanying drawings. In the following description process, an example in which the method is applied to the system shown in FIG. 1 is used. In addition, the method may be performed by two communication apparatuses. The two communication apparatuses are, for example, a first communication apparatus and a second communication apparatus. The first communication apparatus may be an access network device or a communication apparatus that can support the access network device in implementing a function required by the method, or certainly may be another communication apparatus, like a chip system. The second communication apparatus may be a terminal device or a communication apparatus that can support the terminal device to implement a function required by the method, or certainly may be another communication apparatus, like a chip system. Implementations of the first communication apparatus and the second communication apparatus are not limited. For example, the first communication apparatus may be an access network device, and the second communication apparatus is a terminal device; or the first communication apparatus is a communication apparatus that can support the access network device to implement a function required by the method, and the second communication apparatus is a terminal device; or the like. If embodiments of this application are applied to the network architecture shown in FIG. 1, an access network device described below may be the access network device in the network architecture shown in FIG. 1, and a terminal device described below may be the terminal device in the network architecture shown in FIG. 1.

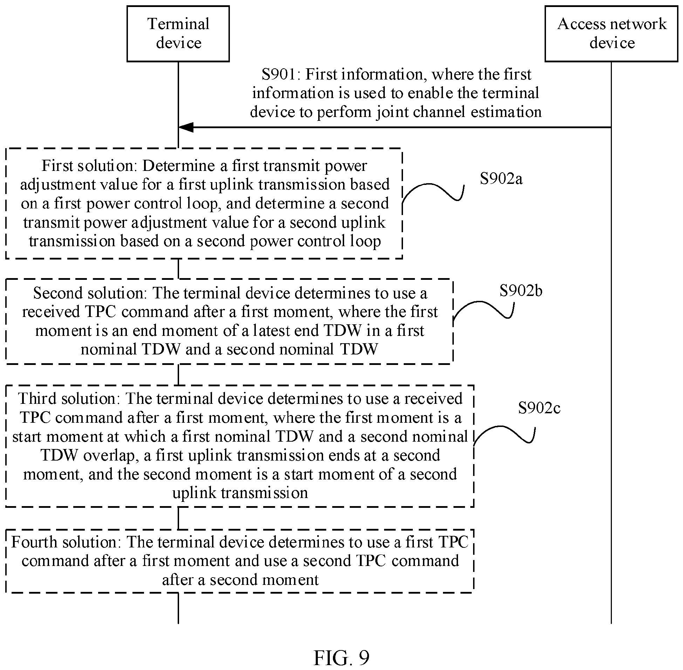

FIG. 9 is a schematic flowchart of a first communication method according to an embodiment of this application. In FIG. 9, an example in which the method is performed by a terminal device and an access network device is used.

S901: The access network device sends first information to the terminal device, and correspondingly, the terminal device receives the first information, where the first information is used to enable the terminal device to perform joint channel estimation.

The first information may be carried in RRC signaling and/or DCI signaling, or it may be considered that the access network device configures, by using the RRC signaling and/or the DCI signaling, whether the terminal device enables joint channel estimation. For example, the access network device sends the first information to the terminal device, where the first information enables joint channel estimation. The terminal device receives the first information, and may determine a nominal TDW. For example, the terminal device may determine, based on a length L configured by the access network device, the nominal TDW whose length is L, for example, L may be an integer greater than or equal to 2; or the terminal device determines the nominal TDW according to a preset rule. For details, refer to the foregoing content. Details are not described herein again.

It may be understood that the access network device may schedule one or more uplink transmissions, and one or more nominal TDWs may be determined for each uplink transmission. For example, the access network device schedules a first uplink transmission and a second uplink transmission, and the terminal device may determine a corresponding first nominal TDW for the first uplink transmission and may determine a corresponding second nominal TDW for the second uplink transmission based on the time domain window length L. If the first nominal TDW and the second TDW do not overlap, the terminal device is enabled to perform joint channel estimation. A TPC command received between first preset duration before a first transmission occasion in the first nominal TDW and first preset duration before a last transmission occasion in the first nominal TDW may be delayed to take effect after the first nominal TDW. Similarly, a TPC command received between second preset time before a first transmission occasion in the second nominal TDW and second preset time before a last transmission occasion in the second nominal TDW may be delayed to take effect after the second nominal TDW.

Alternatively, if the first nominal TDW and the second nominal TDW overlap, a TPC command received in an overlapping part takes effect after the first TDW. This causes power consistency and phase continuity in the second nominal TDW not to be maintained, and cannot implement joint channel estimation. Therefore, in this embodiment of this application, if joint channel estimation is enabled, the terminal device does not expect to be further scheduled to perform the second uplink transmission within the nominal TDW for the first uplink transmission. The second uplink transmission may be a repeated transmission or a TBoMS transmission. For example, the terminal device does not expect to be further scheduled to perform, within the nominal TDW for the first uplink transmission, the second uplink transmission including a repetition or TBoMS. Optionally, the second uplink transmission that does not include a repetition or that is not TBoMS may be scheduled to be performed within the nominal TDW for the first uplink transmission. For the access network device, the access network device does not further schedule to perform the second uplink transmission within the nominal TDW for the first uplink transmission. It may also be understood that it is specified, expected, or required that the access network device does not schedule to perform the second uplink transmission within the nominal TDW for the first uplink transmission.

If Scenario 1 occurs, that is, the terminal device determines the first nominal TDW for the first uplink transmission, and determines the second nominal TDW for the second uplink transmission, where the first nominal TDW and the second nominal TDW partially or fully overlap, the terminal device may determine a first transmit power adjustment value for the first uplink transmission and a second transmit power adjustment value for the second uplink transmission based on one or more of the following solutions.

In a first solution, that is, S902a, the terminal device determines the first transmit power adjustment value for the first uplink transmission based on a first power control loop, and determines the second transmit power adjustment value for the second uplink transmission based on a second power control loop.

The first power control loop may be a power control loop configured for the first uplink transmission, and the second power control loop may be a power control loop configured for the second uplink transmission. The first power control loop and the second power control loop are different. It may also be understood that when TDWs corresponding to different uplink transmissions overlap, the access network device is expected, specified, or required to configure different power control loops for the different uplink transmissions. Alternatively, the terminal device does not expect the access network device to configure a same power control loop for different uplink transmissions, or the terminal device expects to configure different power control loops for different uplink transmissions. In this way, a power control loop corresponding to a TPC command corresponds to a specific uplink transmission, and the TPC command takes effect after a TDW corresponding to the uplink transmission, so that TPC adjustment for different transmissions with different power control loops does not affect each other. This avoids power control chaos caused by overlapping of a plurality of TDWs, and ensures performance of joint channel estimation as much as possible.

For example, the first power control loop for the first uplink transmission is $l_0$, and the second power control loop for the second uplink transmission is $l_1$. If the TPC command sent by the access network device includes $l_0$, the TPC command takes effect after the first nominal TDW; or if the TPC command sent by the access network device includes $l_1$, the TPC command takes effect after the second nominal TDW. Therefore, the terminal device can determine the first transmit power adjustment value for the first uplink transmission based on the first power control loop, and can determine the second transmit power adjustment value for the second uplink transmission based on the second power control loop.

In a second solution, that is, S902b, the terminal device determines to use the received TPC command after a first moment, where the first moment is an end moment of a latest end TDW in the first nominal TDW and the second nominal TDW.

The TPC command may be carried in second information. For example, the access network device sends the second information to the terminal device, where the second information includes the TPC command, and the second information may be carried in RRC signaling and/or DCI signaling. In the second solution, it may also be considered that when TDWs corresponding to a plurality of uplink transmissions overlap, the TPC command takes effect after a latest end TDW in the plurality of TDWs corresponding to the plurality of uplink transmissions ends. This avoids, as much as possible, causing power consistency in each TDW not to be maintained, and ensures performance of joint channel estimation.

For example, the TPC command received by the terminal device between a second moment and a third moment is used after the first moment. The second moment is located before a first transmission occasion in the first nominal TDW and the second nominal TDW, and is separated from the first transmission occasion by first preset duration. It may also be considered that the second moment is a preset moment before a first transmission moment in the first nominal TDW and the second nominal TDW. The third moment is located before a last transmission occasion in the first nominal TDW and the second nominal TDW, and is separated from the last transmission occasion by second preset duration. It may also be considered that the third moment is a preset moment before a last transmission moment in the first nominal TDW and the second nominal TDW. It should be noted that the first preset duration may be predefined, preconfigured, or indicated by the access network device by using RRC signaling, a MAC-CE, or DCI signaling. The second preset duration may also be predefined, preconfigured, or indicated by the access network device by using RRC signaling, a MAC-CE, or DCI signaling. For example, the first preset duration is related to an uplink transmission to which a transmission occasion associated with the first preset duration belongs. The second preset duration is related to an uplink transmission to which a transmission occasion associated with the second preset duration belongs. The first preset duration may be the same as or different from the second preset duration. For example, the first preset duration and the second preset duration are lengths of k symbols, and k is an integer greater than or equal to 1. The second moment may be located on k symbols before the first transmission occasion in the first nominal TDW and the second nominal TDW. The third moment may be located on k symbols before the last transmission occasion in the first nominal TDW and the second nominal TDW. In addition, for a same transmission, for example, a repetition of a same scheduled transmission, preset duration between transmission occasions may be the same. For different transmissions, for example, different TBs scheduled at different times, preset duration between transmission occasions may be the same or may be different.

It may be understood that, for example, a transmit power adjustment value at a transmission occasion after the latest end TDW in the first nominal TDW and the second nominal TDW is determined according to a TPC command received between the second moment and a fourth moment, where the fourth moment is located before the transmission occasion after the latest end TDW in the first nominal TDW and the second nominal TDW, and is separated by third preset duration. The third preset duration may also be predefined, preconfigured, or indicated by the access network device by using RRC signaling, a MAC-CE, or DCI signaling.

It may be understood that, the TPC command is used after the first moment, or the TPC command takes effect after the first moment, that is, the terminal device does not use the TPC command or the like between the first transmission moment in the first nominal TDW and the first moment.

In a third solution, S902c: The terminal device determines to use the received TPC command after a first moment, where the first moment is a start moment at which the first nominal TDW and the second nominal TDW overlap. The first uplink transmission ends at a second moment, and the second moment is a start moment of the second uplink transmission.

That the first uplink transmission ends at the start moment of the second uplink transmission may be understood as that the first uplink transmission is terminated in advance by the second uplink transmission. In the third solution, it may also be understood that when TDWs corresponding to a plurality of uplink transmissions overlap, a previous uplink transmission may be terminated in advance due to a subsequent uplink transmission. For example, if the first uplink transmission is terminated in advance by the second uplink transmission, it is also considered that the first uplink transmission ends at the start moment of the second uplink transmission. It may be understood that the first nominal TDW for the first uplink transmission ends earlier at the start moment at which the first nominal TDW overlaps the second nominal TDW. It may be considered that termination in advance is an end condition of the TDW corresponding to the first uplink transmission, or it may be considered that the determined TDW corresponding to the first uplink transmission ends earlier.

When the TDWs corresponding to the plurality of uplink transmissions overlap, because the previous uplink transmission may be terminated in advance due to the subsequent uplink transmission, a TDW for the previous uplink transmission also ends in advance, so that TDWs respectively corresponding to the plurality of uplink transmissions do not overlap. In this way, a TPC command corresponding to each TDW is delayed to take effect after the TDW. This can ensure power consistency in each TDW to be maintained, that is, ensure performance of joint channel estimation.

Optionally, the access network device schedules the first uplink transmission and configures the first nominal TDW, and the access network device schedules the second uplink transmission and configures the second nominal TDW. If the first nominal TDW and the second nominal TDW overlap, the terminal device may determine that the first nominal TDW ends at a start location at which the first nominal TDW overlaps the second nominal TDW. Optionally, when the access network device determines that the first nominal TDW corresponding to the first uplink transmission overlaps the second nominal TDW corresponding to the second uplink transmission, the access network device may configure a third nominal TDW for the first uplink transmission, where the third nominal TDW is a TDW formed after the first nominal TDW ends at a start location of the second nominal TDW. In other words, the nominal TDW configured by the access network device for the first uplink transmission is a TDW formed after the first nominal TDW ends in advance.

Similar to the second solution, the TPC command received by the terminal device between the second moment and a third moment is used after the first moment. The second moment is located before the first transmission occasion in the first nominal TDW, and is separated from the first transmission occasion by first preset duration. It may also be considered that the second moment is a preset moment before the first transmission occasion in the first nominal TDW. The third moment is located before a last transmission occasion before the second moment, and is separated from the last transmission occasion by second preset duration. It may also be considered that the third moment is a preset moment before the last transmission moment before the second moment. Similar to the second solution, the first preset duration may be predefined, preconfigured, or dynamically indicated by the access network device. The second preset duration may also be predefined, preconfigured, or dynamically indicated by the access network device. For details, refer to related content in the second solution. Details are not described herein again.

It may be understood that the TPC command is used after the first moment, that is, the TPC command is not used between the first transmission moment in the first nominal TDW and the first moment. From a first transmission occasion in the second nominal TDW, the transmit power adjustment value for the second uplink transmission is calculated by using the TPC command that takes effect after the first moment.

In a fourth solution, the terminal device further receives second information, where the second information includes a TPC command. In this case, the terminal device determines to use a first TPC command after a first moment and use a second TPC command after a second moment. The first moment is a start moment at which the first nominal TDW and the second nominal TDW overlap. The second moment is an end moment at which the first nominal TDW and the second nominal TDW overlap.

The first TPC command is received between a third moment and a fourth moment, and the second TPC command is received between the fourth moment and a fifth moment. The third moment is earlier than the first transmission occasion in the first TDW and the second TDW, and is separated from the first transmission occasion in the first TDW and the second TDW by first preset duration. The fourth moment is earlier than a first transmission occasion of an overlapping part between the first TDW and the second TDW, and is separated from the first transmission occasion by second preset duration. The fifth moment is earlier than a first transmission occasion after an end moment at which the first TDW and the second TDW overlap, and is separated from the first transmission occasion by third preset duration. It should be noted that, similar to the second solution, the first preset duration, the second preset duration, and the third preset duration in the fourth solution may all be predefined, preconfigured, or indicated by the access network device by using RRC signaling, a MAC-CE, or DCI signaling.

The TPC command received by the terminal device between the third moment and the fourth moment is used after the first moment, and the TPC command received by the terminal device between the fourth moment and the fifth moment is used after the second moment.

In a possible implementation, if the access network device configures different power control loops for different uplink transmissions, the terminal device determines effective time of the received TPC command based on the first solution. If the access network device configures a same power control loop for different uplink transmissions, the terminal device may determine effective time of the received TPC based on any one of the second solution to the fourth solution.

Optionally, any one of the first solution to the fourth solution may be predefined, or a plurality of solutions of the first solution to the fourth solution may be defined. The terminal device may select a solution based on a specific scenario. It may be understood that the first solution to the fourth solution in FIG. 9 are all optional, that is, the first solution to the fourth solution are not mandatory steps. Therefore, dashed lines are used for illustration in FIG. 9.

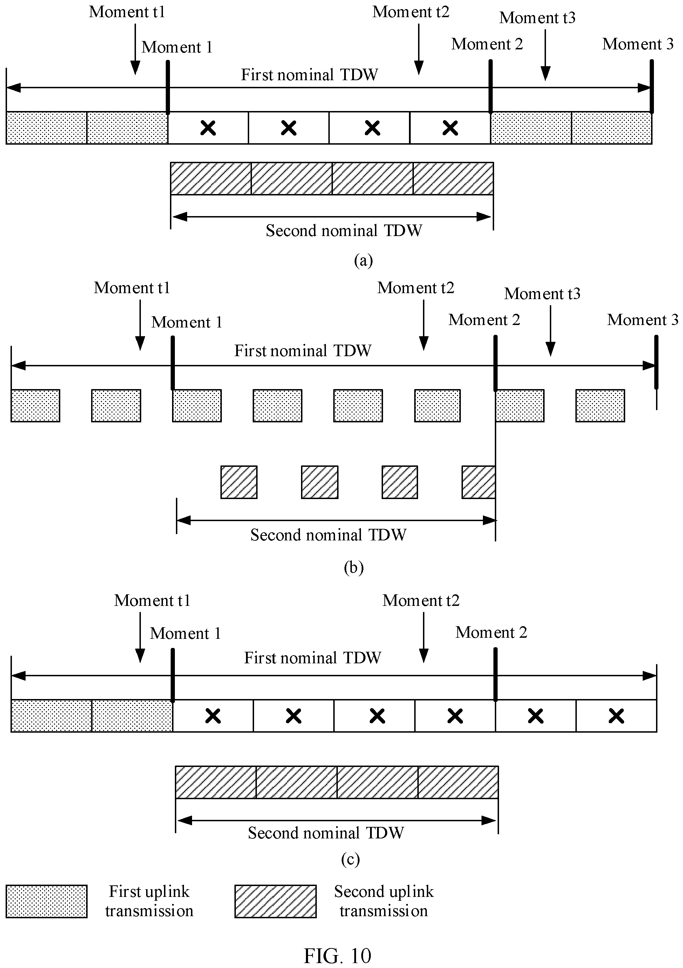

For ease of understanding, FIG. 10 is a diagram of the effective time of the TPC command when the first nominal TDW and the second nominal TDW fully overlap. In FIG. 10, that a start moment of the first nominal TDW is earlier than a start moment of the second nominal TDW is used as an example. In (a) in FIG. 10, that the second uplink transmission preempts the first uplink transmission is used as an example. In (b) in FIG. 10, that the first uplink transmission and the second uplink transmission are alternately transmitted is used as an example. In (c) in FIG. 10, that the first uplink transmission is terminated in advance by the second uplink transmission is used as an example.

In scenarios shown in (a) to (c) in FIG. 10, the terminal device may determine the effective time of the received TPC command based on any one of the first solution, the second solution, and the fourth solution. For example, the access network device configures the first power control loop $l_0$ for the first uplink transmission, and the second power control loop $l_1$ for the second uplink transmission. If the TPC command received by the terminal device includes $l_0$, the TPC command takes effect after the first nominal TDW; or if the TPC command received by the terminal device includes $l_1$, the TPC command takes effect after the second nominal TDW. For another example, if the access network device configures a same power control loop for the first uplink transmission and the second uplink transmission, the terminal device may determine the received TPC command based on the second solution, that is, determine that the TPC command takes effect after the latest end TDW in the first nominal TDW and the second nominal TDW. For another example, if the access network device configures a same power control loop for the first uplink transmission and the second uplink transmission, the terminal device may also determine the received TPC command based on the fourth solution. FIG. 10 is used as an example. The terminal device receives the TPC command at a moment t1, and the TPC command takes effect at the moment 1. The terminal device receives the TPC command at a moment t2, and the TPC command takes effect at the moment 2. The terminal device receives the TPC command at a moment t3, and the TPC command takes effect at the moment 3.

In addition, in a scenario shown in (c) in FIG. 10, the terminal device may also determine the effective time of the received TPC command based on the third solution. For example, the TPC command received by the terminal device in the first nominal TDW takes effect at the start moment at which the first nominal TDW and the second nominal TDW overlap. In other words, the TPC command received by the terminal device in the first nominal TDW takes effect at the moment 1. The TPC command received by the terminal device in the second nominal TDW takes effect after the second nominal TDW ends, that is, takes effect at the moment 2.

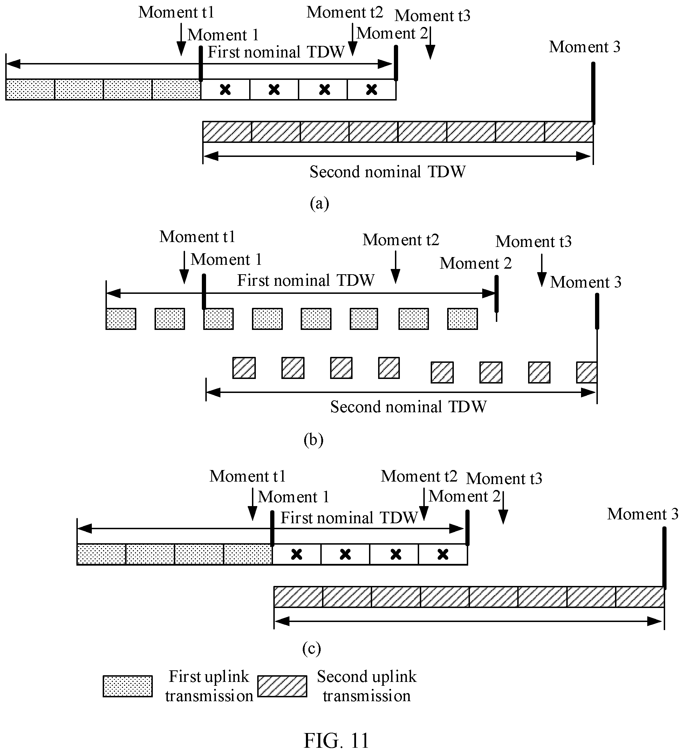

For ease of understanding, FIG. 11 is a diagram of the effective time of the TPC command when the first nominal TDW and the second nominal TDW partially overlap. In FIG. 11, that a start moment of the first nominal TDW is earlier than a start moment of the second nominal TDW is used as an example. In (a) in FIG. 11, that the second uplink transmission preempts the first uplink transmission is used as an example. In (b) in FIG. 11, that the first uplink transmission and the second uplink transmission are alternately transmitted is used as an example. In (c) in FIG. 11, that the first uplink transmission is terminated in advance by the second uplink transmission is used as an example.

In scenarios shown in (a) to (c) in FIG. 11, the terminal device may determine the effective time of the received TPC command based on any one of the first solution or the fourth solution. For example, the access network device configures the first power control loop $l_0$ for the first uplink transmission, and the second power control loop $l_1$ for the second uplink transmission. If the TPC command received by the terminal device includes $l_0$, the TPC command takes effect after the first nominal TDW; or if the TPC command received by the terminal device includes $l_1$, the TPC command takes effect after the second nominal TDW. For another example, if the access network device configures a same power control loop for the first uplink transmission and the second uplink transmission, the terminal device may determine the received TPC command based on the second solution, that is, determine that the TPC command takes effect after the latest end TDW in the first nominal TDW and the second nominal TDW. For another example, if the access network device configures a same power control loop for the first uplink transmission and the second uplink transmission, the terminal device may also determine the received TPC command based on the fourth solution. FIG. 11 is used as an example. The terminal device receives the TPC command at a moment t1, and the TPC command takes effect at the moment 1. The terminal device receives the TPC command at a moment t2, and the TPC command takes effect at the moment 2. The terminal device receives the TPC command at a moment t3, and the TPC command takes effect at the moment 3.

In addition, in a scenario shown in (c) in FIG. 11, the terminal device may also determine the effective time of the received TPC command based on the third solution. For example, the terminal device determines that the received TPC command takes effect at the start moment at which the first nominal TDW and the second nominal TDW overlap. In other words, the terminal device determines that the received TPC command takes effect at the moment 1.

It may be understood that, after determining the effective time of the TPC command based on any one of the first solution to the fourth solution, the terminal device may calculate a corresponding transmit power adjustment value based on a case whether a higher-layer parameter tpc-Accumulation is configured. For example, an uplink transmission is a PUCCH transmission, and a transmit power adjustment value may be determined with reference to the foregoing related content of PUCCH power control. For another example, an uplink transmission is a PUSCH transmission, and a transmit power adjustment value may be determined with reference to the foregoing related content of PUSCH power control.

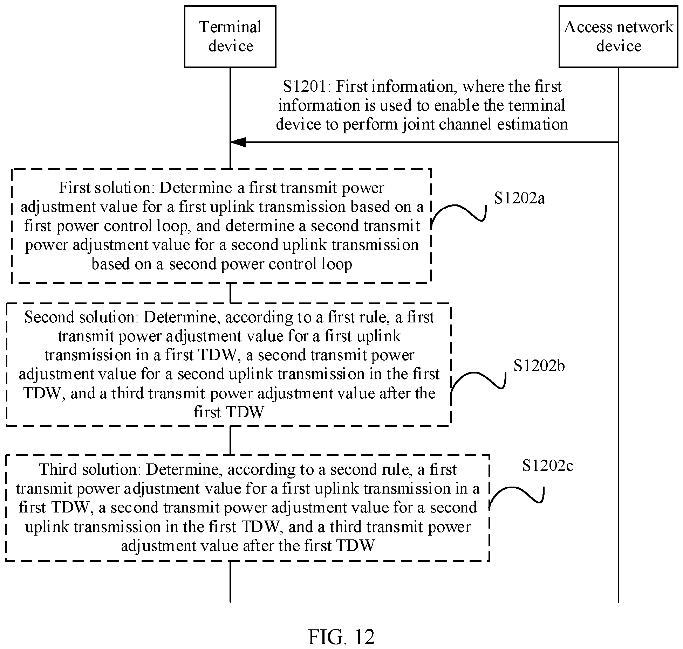

FIG. 12 is a schematic flowchart of a second communication method according to an embodiment of this application. In FIG. 12, an example in which the method is performed by a terminal device and an access network device is used. A difference from FIG. 9 lies in that the second communication method is applied to the foregoing Scenario 2.

S1201: The access network device sends first information to the terminal device, and correspondingly, the terminal device receives the first information, where the first information is used to enable the terminal device to perform joint channel estimation.

Similar to S901, the terminal device receives the first information, and may determine a first TDW based on the first information. The access network device may schedule one or more uplink transmissions. For example, the access network device schedules a first uplink transmission and a second uplink transmission. The terminal device may determine, based on scheduling of the access network device, that the first uplink transmission corresponds to the first TDW, and determine a second TDW corresponding to the second uplink transmission. It may be understood that the first uplink transmission may be scheduled by using RRC signaling, or may be referred to as a CG transmission; or the first uplink transmission may be scheduled by using DCI signaling, or may be referred to as a DG transmission. The second uplink transmission may be scheduled by using DCI signaling, and is also referred to as a DG transmission. In this embodiment of this application, when the first uplink transmission is the first transmission in the foregoing Scenario 2, the second uplink transmission may be the second transmission in the foregoing Scenario 2. Generally, if DCI signaling for scheduling the second uplink transmission includes a TPC command, the TPC command takes effect at the beginning of the transmission. It may be understood that, that the DCI signaling for scheduling the second uplink transmission includes the TPC command may be considered that the TPC command is for the second uplink transmission, or the TPC command is a UE-specific TPC command. When the first TDW and the second TDW are a same TDW, if the UE-specific TPC command is delayed to take effect after a nominal TDW, transmit power control corresponding to the UE-specific TPC command is inaccurate.

Therefore, in this embodiment of this application, the terminal device may determine, based on one or more of the following solutions, a first transmit power adjustment value for the first uplink transmission, a second transmit power adjustment value for the second uplink transmission, or a third transmit power adjustment value at a transmission occasion after the first TDW.

In a first solution, that is, S 1202a, the terminal device determines the first transmit power adjustment value for the first uplink transmission based on a first power control loop, and determines the second transmit power adjustment value for the second uplink transmission based on a second power control loop.

The first power control loop may be a power control loop configured for the first uplink transmission, and the second power control loop may be a power control loop configured for the second uplink transmission. The first power control loop and the second power control loop are different. In this way, transmit power adjustment values for uplink transmissions are determined according to TPC commands including corresponding power control loops, and TPC command power adjustment corresponding to the uplink transmissions does not affect each other. This avoids an incorrect TPC command used in the uplink transmission, and ensures power consistency and phase continuity to be maintained in the TDW, that is, ensures performance of joint channel estimation.

For example, the first power control loop for the first uplink transmission is $l_0$, and the second power control loop for the second uplink transmission is $l_1$. The access network device schedules the first uplink transmission, where the sent TPC command includes $l_0$, and the terminal device determines the first transmit power adjustment value for the first uplink transmission based on the first power control loop $l_0$. The access network device schedules the second uplink transmission, where the sent TPC command includes $l_1$, and the terminal device determines the second transmit power adjustment value for the second uplink transmission based on the second power control loop $l_1$. This can ensure power consistency and phase continuity in an actual TDW for the first uplink transmission to be maintained, and power consistency and phase continuity in an actual TDW for the second uplink transmission to be maintained, and ensure performance of performing joint channel estimation by the terminal device.

In the first solution, it may also be understood that when there are a plurality of uplink transmissions in one TDW, the access network device is expected or required or specified to configure different power control loops for different uplink transmissions. In other words, the access network device is not expected to configure a same power control loop for different uplink transmissions. For the access network device, when there are a plurality of uplink transmissions in one TDW, the access network device configures different power control loops for different uplink transmissions, that is, does not configure a same power control loop for the different uplink transmissions.

Second solution, that is, S1202b, the terminal device determines, according to a first rule, a first transmit power adjustment value for the first uplink transmission in the first TDW, a second transmit power adjustment value for the second uplink transmission in the first TDW, and a third transmit power adjustment value after the first TDW. It may be understood that before performing S 1202b, the terminal device further receives second information from the access network device, where the second information includes a first TPC command. The second information may be carried in DCI signaling. It may also be understood that the first TPC command is a TPC command carried in DCI signaling for scheduling the second uplink transmission.

The first rule may be that in the first TDW, transmit power adjustment values at transmission occasions before a first transmission occasion of the second uplink transmission are equal. In the first TDW, transmit power adjustment values at the first transmission occasion of the second uplink transmission and transmission occasions after the first transmission occasion are determined according to the first TPC command and/or a second TPC command received in a first time domain range. The first time domain range is a time domain range from first preset duration before the first transmission occasion in the first TDW to second preset duration before the first transmission occasion of the second uplink transmission. The third transmit power adjustment value is determined according to the first TPC command and/or a second TPC command received in a second time domain range. The second time domain range is a time domain range from the second preset duration before the first transmission occasion of the second uplink transmission to third preset duration before a transmission occasion after the first TDW. The first preset duration, the second preset duration, and the third preset duration may all be predefined, preconfigured, or indicated by the access network device by using RRC signaling, a MAC-CE, or DCI signaling. The first preset duration, the second preset duration, and the third preset duration may be the same, or may be different. Optionally, in the first TDW, the transmit power adjustment values at the first transmission occasion of the second uplink transmission and the transmission occasions after the first transmission occasion are equal.

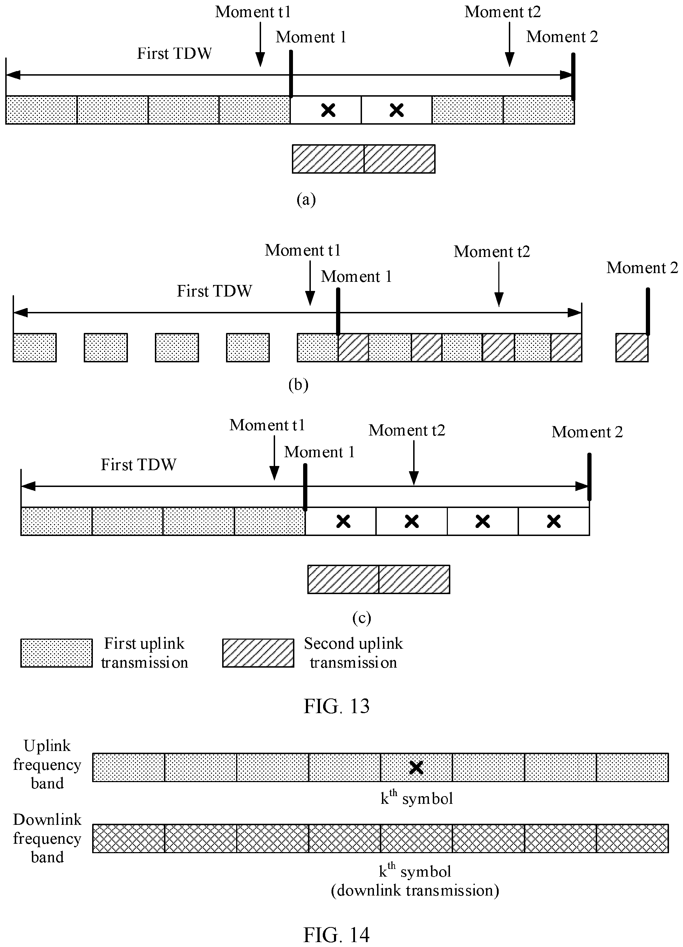

For ease of understanding, the following describes the first rule by using FIG. 13 as an example. FIG. 13 is a diagram of effective time of TPC commands for the two uplink transmissions in the first TDW. In (a) in FIG. 13, that the second uplink transmission preempts the first uplink transmission is used as an example. In (b) in FIG. 13, that the first uplink transmission and the second uplink transmission are alternately transmitted is used as an example. In (c) in FIG. 13, that the first uplink transmission is terminated in advance by the second uplink transmission is used as an example.

That in the first TDW, the transmit power adjustment values at the transmission occasions before the first transmission occasion of the second uplink transmission are equal may also be understood that a TPC command received at the transmission occasion before the first transmission occasion of the second uplink transmission takes effect or is used after a start moment of the first transmission occasion of the second uplink transmission. The first TPC command is received in the first time domain range, and the first TPC command takes effect after the start moment of the first transmission occasion of the second uplink transmission. It may also be considered that the transmit power adjustment values at the transmission occasions before the first transmission occasion of the second uplink transmission are equal. (a) to (c) in FIG. 13 are used as an example. The first TPC command is received at a moment t1, and the first TPC command takes effect at a moment 1.

If the terminal device receives a second TPC command within the first time domain range in the first TDW, in this case, the transmit power adjustment values at the first transmission occasion of the second uplink transmission and the transmission occasions after the first transmission are determined according to the first TPC command and/or the second TPC command. For example, if a higher-layer parameter tpc-Accumulation is configured, and the second PTC command is specific to the terminal device, that is, the second TPC command is a UE-specific TPC command, the second transmit power adjustment value for the second uplink transmission is determined according to the second TPC command and a TPC command before the second TPC command is used. The TPC command before the second TPC command is used may be considered as accumulating PTC commands for all terminal devices before the second TPC command, that is, a common TPC command. (a) to (c) in FIG. 13 are used as an example. The first TPC command is received at a moment t2, and the first TPC command takes effect at a moment 2. It may be understood that common TPC commands after the moment 2 are accumulated and used in the first TDW.

Third solution, that is, S1202c, the terminal device determines, according to a second rule, a first transmit power adjustment value for the first uplink transmission in the first TDW, a second transmit power adjustment value for the second uplink transmission in the first TDW, and a third transmit power adjustment value after the first TDW.

The second rule may be as follows: In the first TDW, transmit power adjustment values of transmission occasions before the first transmission occasion of the second uplink transmission are equal; or in the first TDW, transmit power adjustment values of a first transmission occasion of the second uplink transmission and transmission occasions after the first transmission occasion are determined according to the first TPC command, where the first TPC command is a last TPC command received in the first TDW. The third transmit power adjustment value is determined according to the first TPC command, or the third transmit power adjustment value is determined according to a last TPC command that is for a plurality of terminal devices and that is received in the first TDW, where there is a second TPC command after the first TPC command, and the second TPC command is for all the terminal devices.

That in the first TDW, the transmit power adjustment values at the transmission occasions before the first transmission occasion of the second uplink transmission are equal may also be understood that a TPC command received within preset duration before the first transmission occasion of the second uplink transmission takes effect or is used after a start moment of the first transmission occasion of the second uplink transmission, or

in the first TDW, the transmit power adjustment values at the first transmission occasion of the second uplink transmission and the transmission occasions after the first transmission occasion may be determined according to a last TPC command received in the first TDW. That is, the last TPC command received in the first TDW is used to determine the transmit power adjustment values at the first transmission occasion of the second uplink transmission and the transmission occasions after the first transmission occasion. For example, if a higher-layer parameter tpc-Accumulation is configured, and the last TPC command received in the first TDW is a UE-specific TPC command, the last TPC command is used for the second transmit power adjustment value for the second uplink transmission. TPC commands before the last TPC command are not accumulated. This can ensure power consistency and phase continuity in an actual TDW for the second uplink transmission to be maintained, and ensure joint channel estimation. It should be understood that, if a higher-layer parameter tpc-Accumulation is not configured, received common TPC commands are accumulated in the first TDW, and a transmit power adjustment value is calculated based on all the received common TPC commands.

The third transmit power adjustment value after the first TDW may be determined according to the first TPC command. For example, tpc-Accumulation is not configured, and the first TPC command received by the terminal device takes effect or is used after the first TDW. Alternatively, the third transmit power adjustment value after the first TDW is determined according to a last TPC command that is received in the first TDW and that is for a plurality of terminal devices. If there is a second TPC command after the first TPC command, the second TPC command is for all terminal devices. It may also be understood that the terminal device first receives the first TPC command, and then receives the second TPC command, where the first TPC command may be a UE-specific TPC command, and the second TPC command may be a common TPC command. In this case, the third transmit power adjustment value after the first TDW may be calculated according to the last TPC command received in the first TDW. It may be understood that, if all TPC commands received by the terminal device between a preset moment before a first transmission occasion in the first TDW and a preset moment before a last transmission occasion in the first TDW are common TPC commands, the third transmit power adjustment value after the first TDW may be determined by using the last received common TPC command.

In a possible implementation, the access network device configures different power control loops for the first uplink transmission and the second uplink transmission, and the terminal device determines the transmit power adjustment value for the first uplink transmission and the transmit power adjustment value for the second uplink transmission based on the first solution. Alternatively, the access network device configures a same power control loop for the first uplink transmission and the second uplink transmission, and the terminal device may determine effective time of the received TPC based on the second solution or the third solution.

Optionally, the access network device configures a same power control loop for different uplink transmissions. For a PUCCH, the terminal device may determine, based on the second solution, the transmit power adjustment value for the first uplink transmission in the first TDW, the transmit power adjustment value for the second uplink transmission, and the transmit power adjustment value after the first TDW.

Optionally, the access network device configures a same power control loop for different uplink transmissions. If the access network device does not configure a higher-layer parameter tpc-Accumulation for a PUSCH, the terminal device needs to accumulate TPC commands when determining a transmit power adjustment value. For the PUSCH, the terminal device may determine, based on the second solution, the transmit power adjustment value for the first uplink transmission in the first TDW, the transmit power adjustment value for the second uplink transmission, and the transmit power adjustment value after the first TDW.

Optionally, the access network device configures a same power control loop for the first uplink transmission and the second uplink transmission. If the access network device configures a higher-layer parameter tpc-Accumulation for the terminal device, the terminal device does not need to accumulate the TPC commands when determining a transmit power adjustment value. For a PUSCH, the terminal device may determine, based on the third solution, the transmit power adjustment value for the first uplink transmission in the first TDW, the transmit power adjustment value for the second uplink transmission, and the transmit power adjustment value after the first TDW.

In a fourth solution, if the terminal device has a capability of supporting restarting a TDW, a TPC command may be used as an event that causes power consistency and phase continuity not to be maintained. It may also be understood that the event that causes power consistency and phase continuity not to be maintained occurs at a location (or an effective location) in which the TPC command is used. The capability of restarting the TDW may also be understood as a capability of restarting joint channel estimation or a capability of restarting DMRS bundling. Optionally, a common TPC command and/or a UE-specific TPC command may be used as the event that causes power consistency and phase continuity not to be maintained. It should be understood that the common TPC command and the UE-specific TPC command are carried by using different DCI signaling.

The terminal device receives the first information and second information, where the first information is used to enable the terminal device to perform joint channel estimation, and the second information carries the TPC command. Optionally, the second information carries a UE-specific TPC command. If the terminal device has the capability of supporting restarting the TDW, the terminal device determines that the first TDW ends on a symbol before a first event, where the first TDW is for joint channel estimation; or if the terminal device does not have the capability of restarting the TDW, the terminal device uses the TPC command after the first TDW, where the first TDW includes a configured TDW and/or an actual TDW. The first event is at the location in which the TPC command carried in the second information is used in the first TDW.

It should be understood that, if the terminal device has the capability of supporting restarting the TDW, the terminal device may restart a new actual TDW after receiving the UE-specific TPC command. Generally, after the TDW is interrupted, the new actual TDW is restarted, and performance of joint channel estimation is not greatly affected. Therefore, TPC adjustment can be preferably performed, to ensure that the terminal device performs a transmission at an appropriate power in a timely manner as much as possible. Alternatively, if the terminal device does not have the capability of supporting restarting the TDW, the UE-specific TPC command is delayed to take effect after the TDW. Generally, the TDW cannot be restarted after being interrupted, and performance of joint channel estimation is severely affected. Therefore, gains for joint channel estimation can be ensured as much as possible by delaying the TPC command to take effect.

It should be understood that, if the access network device configures the higher-layer parameter tpc-Accumulation for the terminal device, that is, when the terminal device does not need to accumulate the TPC commands when determining the transmit power adjustment value, the TPC commands are accumulated and take effect after the TDW. Alternatively, if the access network device does not configure the higher-layer parameter tpc-Accumulation for the terminal device, that is, when the terminal device needs to accumulate the TPC commands when determining the transmit power adjustment value, the TPC command is delayed to take effect after the TDW, and only the last TPC command takes effect.

Optionally, any one of the first solution to the fourth solution may be predefined, or a plurality of solutions of the first solution to the fourth solution may be defined. The terminal device may select a solution based on a specific scenario. It may be understood that the first solution to the fourth solution in FIG. 12 are all optional, that is, the first solution to the fourth solution are not mandatory steps. Therefore, dashed lines are for illustration in FIG. 12.

It may be understood that the TPC command in the embodiment shown in FIG. 9 may be for a plurality of terminal devices, or may be for one terminal device. That is, the TPC command in the embodiment shown in FIG. 9 may be a common TPC command, or may be a UE-specific TPC command. The TPC command received by the terminal device may include a common TPC command and/or a UE-specific TPC command. Relatively, in the embodiment shown in FIG. 12, the TPC command included in the DCI signaling for scheduling the second uplink transmission is specific to one terminal device, namely, a UE-specific TPC command. A TPC command other than the TPC command included in the DCI signaling for scheduling the second uplink transmission may be for a plurality of terminal devices, namely, a common TPC command.

It may be understood that an actual TDW is started from a first symbol of a first available slot in each configured TDW for DMRS bundling. The start actual TDW ends when the event that causes power consistency and phase continuity not to be maintained occurs. In a possible scenario, for example, a duplex manner of the terminal device is HD-FDD. In this case, the terminal device cannot simultaneously perform receiving and sending on frequency bands in different transmission directions within a same time domain length. For example, FIG. 14 is a diagram of HD-FDD. In FIG. 14, if an uplink frequency band corresponding to a symbol k is used to send uplink information, a downlink frequency band corresponding to the symbol k cannot receive downlink information. Alternatively, uplink information cannot be sent on a time domain symbol used to receive downlink information. Therefore, in this embodiment of this application, a new event that causes power consistency and phase continuity not to be maintained, for example, a first event, is proposed. It should be understood that an actual TDW ends at a last symbol before the first event, or ends at a last symbol of an uplink transmission before the first event.

Therefore, in this embodiment of this application, a new event that causes power consistency and phase continuity not to be maintained, for example, a first event, is proposed. It should be understood that an actual TDW ends at a last symbol before the first event, or ends at a last symbol of an uplink transmission before the first event.

For example, the first event may be an overlapping of a symbol for an uplink transmission and a symbol for a downlink transmission in the first TDW. For another example, the first event may be an overlapping of a gap between two uplink transmissions and a symbol for a downlink transmission in the first TDW. Optionally, the two uplink transmissions in the first TDW are two adjacent or consecutive uplink transmissions. For still another example, the first event may be droppings of some transmissions or a cancellation of a transmission of uplink transmissions in the first TDW due to a processing conflict (which is specifically described below). Optionally, the symbol for the uplink transmission in the first TDW overlaps the symbol for the downlink transmission. The uplink transmission may include one or more of the following transmissions: a PUSCH repetition, a PUCCH repetition, TBoMS, or a TBoMS repetition. The PUSCH repetition may include a repetition type A, or may include a repetition type B. The downlink transmission includes downlink reception and/or downlink monitoring. The downlink reception may include receiving one or more of the following: a PDCCH, a PDSCH, a downlink channel state information reference signal, a downlink path loss reference signal, a synchronization signal and physical broadcast channel (synchronization signal and physical broadcast channel, SSB) block, and the like. Downlink monitoring may include monitoring (monitoring) an SSB, monitoring (monitoring) a control information resource set (CORSTE), monitoring (monitoring) PDCCH search space, or the like. Optionally, the SSB may be configured by using a higher-layer parameter ssb-PositionsInBurst.

It should be understood that, that the droppings of some transmissions or the cancellation of the transmission of the uplink transmissions due to the processing conflict may be understood as a dropping or cancellation of the uplink transmission due to a conflict rule. The conflict rule may include one or more of the following rules.

Rule 1: A symbol, in a DCI format, for scheduling an uplink transmission comes from a symbol set in which a symbol, in a DCI format, for scheduling a downlink transmission is located. In other words, if the symbol, in the DCI format, for scheduling the uplink transmission is the symbol in the symbol set, the terminal device does not detect the DCI format. That is, the terminal device does not expect to detect the DCI format for scheduling the downlink transmission in a set of symbols, and does not expect to detect the DCI format for scheduling the uplink transmission in the set of symbols.

Rule 2: The terminal device receives the downlink transmission, for example, a PDCCH, PDSCH, CSI-RS, or DL-PRS, in a set of symbols based on a configuration by higher-layer signaling, and the terminal device detects a DCI format that indicates the terminal device to send the uplink transmission, for example, a PUSCH, a PUCCH, a PRACH, or an SRS, on at least one symbol in the set of symbols. It should be understood that if the terminal device does not detect that the terminal device is indicated to send the uplink transmission on the at least one symbol in the set of symbols, the terminal device receives the downlink transmission on the set of symbols; or if the terminal device detects that the terminal device is indicated to send the uplink transmission on the at least one symbol in the set of symbols, the terminal device does not receive the downlink transmission on the set of symbols.

Rule 3: If the terminal device transmits the uplink transmission, for example, an SRS, PUCCH, or PUSCH, in a set of symbols based on a configuration by higher-layer signaling, and the terminal device detects a DCI format that indicates the terminal device to receive the downlink transmission (for example, a CSI-RS or PDSCH) on at least one symbol in the set of symbols, (1) an interval between a first symbol in the set of symbols and a last symbol, in the DCI format, detected in a resource set (CORESET) is greater than time in which the terminal device prepares for the uplink transmission. In other words, if the interval between the first symbol in the set of symbols and the last symbol, in the DCI format, detected in the resource set (CORESET) is within the time in which the terminal device prepares for the uplink transmission, the terminal device does not expect to cancel the uplink transmission; (2) the terminal device does not expect to detect a last symbol, in the DCI format, in the resource set (CORESET), and the terminal device cancels receiving of the downlink transmission on a symbol in time in which the terminal device prepares for the uplink transmission.

Rule 4: In a same set of symbols, both a dedicated higher-layer parameter for configuring the uplink transmission and a dedicated higher-layer parameter for configuring the downlink transmission are received. In other words, the terminal device does not expect to receive, in the set of symbols, both the dedicated higher-layer parameter for configuring the uplink transmission and the dedicated higher-layer parameter for configuring the downlink transmission. For example, the terminal device does not expect to receive, in a set of symbols, a type 0/0A/1/2-PDCCH CSS set configuration for PSCCH reception and in the set of symbols, a dedicated higher-layer parameter for configuring an uplink transmission.

Rule 5: If the terminal device would transmit a PUSCH, PUCCH, or SRS based on a configuration by higher-layer signaling and the terminal device is indicated presence of SS/PBCH blocks by ssb PositionsInBurst in SIB1 or in ServingCellConfigCommon, the terminal device does not transmit: (1) the PUSCH or PUCCH if a last symbol of the PUSCH or PUCCH would not be $N_{Tx-Rx} \cdot T_c$ prior to a first symbol of the next earliest SS/PBCH block; (2) the PUSCH or PUCCH if a last symbol of the PUSCH or PUCCH would not be at least $N_{Tx-Rx} \cdot T_c$ after a last symbol of the previous latest SS/PBCH block; (3) the PUSCH or PUCCH if a symbol of the SSB would not be at least $N_{Tx-Rx} \cdot T_c$ T_uC prior to a first symbol of the next earliest SS/PBCH block; and (4) the PUSCH or PUCCH if a symbol of the SSB would not be at least $N_{Tx-Rx} \cdot T_c$ after a last symbol of the previous latest SS/PBCH block.

Rule 6: If the terminal device would transmit a PUSCH, PUCCH, PRACH, or SRS based on a detected DCI format and the terminal device is indicated presence of SS/PBCH blocks by ssb PositionsInBurst in SIB1 or in ServingCell-ConfigCommon in a set of symbols, the terminal device does not transmit the PUSCH, PUCCH, or PRACH if an uplink transmission would overlap with any symbol from the set of symbols and the terminal device does not transmit the SRS in the set of symbols.

Rule 7: If the terminal device would transmit a PRACH or MsgA PUSCH in a set of symbols, and receive a PDCCH, PDSCH, CSI-RS, or DL-PRS, or is indicated presence of SS/PBCH blocks by ssb PositionsInBurst in SIB1, or is indicated presence of SS/PBCH blocks by ssb PositionsInBurst in ServingCellConfigCommon in a symbol including any symbol from the set of symbols, the terminal device may choose to transmit the PRACH or MsgA PUSCH, or receive the PDSCH, CSI-RS, PL-RS, PDCCH, or SS/PBCH blocks.

Rule 8: If the terminal device would receive a PDCCH, PDSCH, CSI-RS, or DL PRS based on a configuration by higher layers, or indicated presence of SS/PBCH blocks by using ssb PositionsInBurst in SIB1, or indicated presence of SS/PBCH blocks by ssb PositionsInBurst in ServingCellConfigCommon in a set of symbols, and the terminal device sends a PRACH or MsgA PUSCH $\cdot$ T_uuC or N_uuTxRx $\cdot$ T_u "c" starting or ending with a symbol earlier or later than N_uxTx, and the terminal device may choose, from a last or first symbol in the set of symbols, whether to send the PRACH or a MsgA PUSCH, or to receive the PDSCH, CSI-RS, DL-PRS, PDCCH, or SS/PBCH blocks.

For the terminal device, the terminal device receives the first information from the access network device, where the first information is used to enable the terminal device to perform joint channel estimation. The terminal device may determine the first nominal TDW based on the first information, and the terminal device may determine that the actual TDW in the first nominal TDW ends on the symbol before the first event. Alternatively, the terminal device may determine that the actual TDW in the first nominal TDW ends on a last symbol for the uplink transmission before the first event. Optionally, a duplex manner of the terminal device is HD-FDD.

Optionally, a duplex manner of the terminal device is TDD, and the event that causes power consistency and phase continuity not to be maintained may include that a flexible symbol is modified to a downlink symbol and/or a flexible symbol by using an SFI. The flexible symbol is a flexible symbol based on TDD-UL-DL-Configcommon and/or tdd-UL-DL-ConfigurationDedicated. The event that causes power consistency and phase continuity not to be maintained may also include that flexible symbols are scheduled for downlink reception and/or downlink monitoring. The flexible symbol is a flexible symbol based on TDD-UL-DL-Configcommon and/or tdd-UL-DL-ConfigurationDedicated.

Optionally, a duplex manner of the terminal device is any one of TDD, FDD, HD-FDD, and SUL (supplementary uplink). For example, the terminal device may be a half-duplex terminal device in paired spectrum (half-duplex UE in paired spectrum), that is, a terminal device in a half-duplex FDD scenario. The event that causes power consistency and phase continuity not to be maintained may include a dropping or cancellation of a transmission due to termination in advance. The transmission is a configured grant transmission.

When joint channel estimation is enabled, if the UE-specific TPC command is delayed to take effect after the nominal TDW, transmit power control corresponding to the UE-specific TPC command is inaccurate. Therefore, embodiments of this application provide a new method for determining a power adjustment value. That is, a transmit power adjustment value at a transmission occasion may be determined according to a common TPC command and a UE-specific TPC command.

For example, a terminal device receives first information, where the first information enables the terminal device to perform joint channel estimation. The terminal device may determine, based on a first power control adjustment value and a second power control adjustment value, the transmit power adjustment value at the first transmission occasion in a first TDW and/or a transmit power adjustment value at a second transmission occasion after the first TDW. Optionally, second transmission occasion is a first transmission occasion after the first TDW. The first power control adjustment value is a power adjustment value corresponding to a first TPC command. The second power control adjustment value is a power adjustment value corresponding to a second TPC command. The first TPC command is a TPC command for all terminal devices, and the second TPC command is a TPC command for a specific terminal device. It may also be understood that the first TPC command is the common TPC command, and the second TPC command is the UE-specific TPC command. Optionally, the first power adjustment value at the first transmission occasion is equal to a first power adjustment value at a start transmission occasion in the first TDW in which the first transmission occasion is located. Optionally, the first transmission occasion and the start transmission occasion in the first TDW in which the first transmission occasion is located are different transmission occasions.

A transmission occasion i is used as an example. If an access network device does not provide a higher-layer parameter tpc-Accumulation for the terminal device, that is, when the terminal device needs to accumulate TPC commands when determining a transmit power adjustment value, the transmit power adjustment value at the transmission occasion i is $f_i = f_i^1 + f_i^2$, where $f_i^1$ is a power adjustment value corresponding to a common TPC command, and $f_i^2$ is a power adjustment value corresponding to a UE-specific TPC command. It may be understood that for $f_i^1 = f_{i_1}^1$ at a non-start transmission occasion i in the first TDW, a transmission occasion $i_1$ is a start transmission occasion in the first TDW in which the transmission occasion i is located. It should be understood that the first transmission occasion i after the configured TDW may be a transmission occasion that does not belong to the first TDW, or may be a start transmission occasion in a next TDW. Therefore, in embodiments of this application, $f_i^1 = f_{i_1}^1 + \sum \delta_i$, where $f_{i_1}^1$ is a power adjustment value at the start transmission occasion in the first TDW, and $\Sigma \delta_i$ is a sum of transmit power adjustment values corresponding to TPC commands received in a third time domain range. The third time domain range is a time domain range from first preset duration before a first symbol of a TDW preceding the current transmission occasion i to second preset duration before the current transmission occasion. The first preset duration, and the second preset duration may all be predefined, preconfigured, or indicated by the access network device by using RRC signaling, a MAC-CE, or DCI signaling. The first preset duration may be the same as or different from the second preset duration. The first preset duration is, for example, k1 symbols, and the second preset duration is, for example, k2 symbols.

$f_i^2$ may be determined in a conventional method for determining the power adjustment value at the transmission occasion i. For details, refer to related content of PUSCH power control described in the technical term (3) and related content of PUCCH power control described in the technical term (4) described above. Details are not described herein again. It should be noted that the first TDW includes a configured TDW and/or an actual TDW.

When the access network device provides the higher-layer parameter tpc-Accumulation for the terminal device, that is, when the terminal device does not need to accumulate TPC commands when determining the transmit power adjustment value, the common TPC command does not take effect in the first TDW, in other words, the common TPC command is delayed to take effect after the first TDW; and the UE-specific TPC command takes effect. At the first transmission occasion after the first TDW, the TPC command received in the third time domain range is used, that is, a last TPC command in the common TPC command and the UE-specific TPC command that are received in the third time domain range is used. For specific calculation of the power adjustment value at the transmission occasion i, refer to related content of PUSCH power control described in the technical term (3) and related content of PUCCH power control described in the technical term (4) described above. Details are not described herein again.

It may be understood that joint channel estimation is configured by using RRC signaling. After configuring the terminal device to enable joint channel estimation, the access network device may further configure the terminal device to disable joint channel estimation. Alternatively, the access network device first configures the terminal device to disable joint channel estimation, and then configures the terminal device to enable joint channel estimation. In this case, if RRC signaling is within a specific nominal TDW, joint channel estimation cannot be performed if an uplink transmission is still performed at a nominal TDW with an initially determined size.

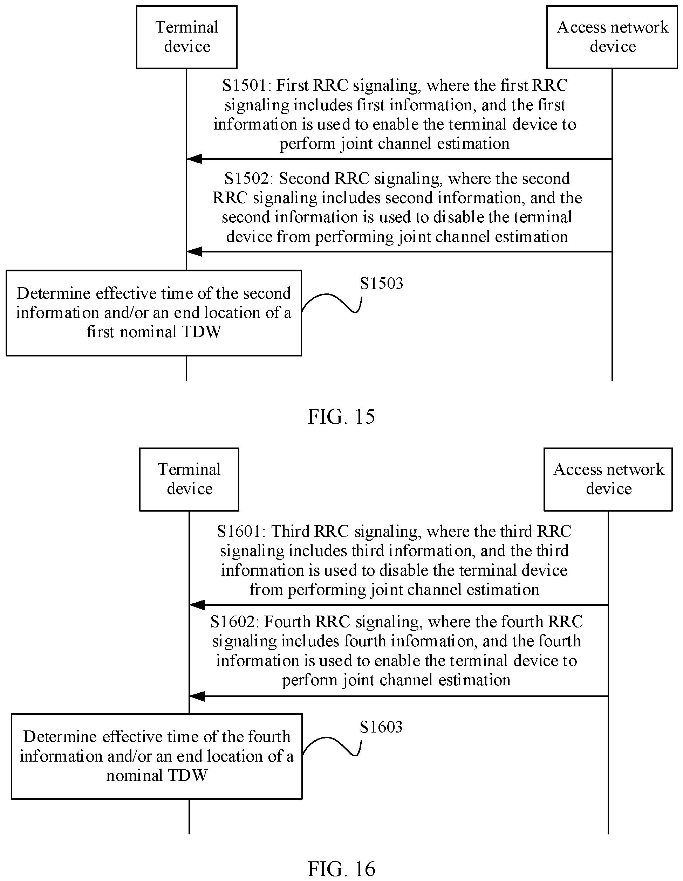

Therefore, a third communication method provided in embodiments of this application is provided. FIG. 15 is a schematic flowchart of a third communication method according to an embodiment of this application. The third communication method is applicable to the network structure shown in FIG. 1. The following uses an example in which the third communication method is performed by using an access network device and a terminal device.

S1501: The access network device sends first RRC signaling to the terminal device, and correspondingly, the terminal device receives the first RRC signaling, where the first RRC signaling includes first information, and the first information is used to enable the terminal device to perform joint channel estimation.

After receiving the first RRC signaling, the terminal device may determine a first nominal TDW based on the first information. For how the terminal device determines the first nominal TDW, refer to related content in S901. Details are not described herein again.

S1502: The access network device sends second RRC signaling to the terminal device, and correspondingly, the terminal device receives the second RRC signaling, where the second RRC signaling includes second information, and the second information is used to disable the terminal device to perform joint channel estimation. It should be noted that the access network device may also indicate, by using RRC signaling that does not include a higher-layer parameter PUSCH-DMRS-Bundling or PUCCH-DMRS-Bundling, to disable the terminal device from performing joint channel estimation. That is, when the higher-layer parameter PUSCH-DMRS-Bundling or PUCCH-DMRS-Bundling is not provided, joint channel estimation is not enabled/disabled by default. In other words, the RRC signaling sent by the access network device to the terminal device may not include second information. After receiving the RRC signaling, the terminal device may be disabled from performing joint channel estimation by default.

The access network device configures, by using the RRC signaling, whether the terminal device enables joint channel estimation. In this case, an enabling state of joint channel estimation for the terminal device may change. For example, the first RRC signaling is used to enable the terminal device to perform joint channel estimation, and the second RRC signaling is used to disable the terminal device from performing joint channel estimation. In this case, if the second RRC signaling takes effect in the first nominal TDW, transmit power consistency and phase continuity may not be maintained in the first TDW. Consequently, an actual TDW in the first TDW cannot meet joint channel estimation. Therefore, the terminal device does not expect, within one nominal TDW, to change from enabling joint channel estimation to disabling joint channel estimation. It may also be understood that it is expected, required, or specified that the access network device does not configure, within one nominal TDW, the terminal device to change from enabling joint channel estimation to disabling joint channel estimation.

S1503: The terminal device determines effective time of the second information and/or an end location of the first nominal TDW.

The access network device configures, in the first nominal TDW, the terminal device to change from enabling joint channel estimation to disabling joint channel estimation. In this case, the terminal device may determine the effective time of the second information, that is, the terminal device determines when to use the second information. That the second information takes effect may also be considered as that disabling of joint channel estimation takes effect, that is, joint channel estimation is disabled after the effective time of the second information. The terminal device may alternatively determine the end location of the first nominal TDW, to ensure that the actual TDW in the first nominal TDW meets joint channel estimation. Possible effective time of the second information and a possible end location of the first nominal TDW are described below by using specific examples.

Example 1: The terminal device may determine that the effective time of the second information is effective time of the second RRC signaling. In this case, it may be considered that the terminal device determines, when receiving the second RRC signaling, to disable joint channel estimation. The terminal device may end the first nominal TDW in advance. For example, the first nominal TDW ends at an effective location of the second RRC signaling. This can ensure transmit power consistency and phase continuity of the terminal device to be maintained between a first transmission occasion in the first nominal TDW and the effective time of the second RRC signaling, that is, ensure performance of joint channel estimation performed by the terminal device.

Example 2: The terminal device may also consider that the second information is an end event in the actual TDW, and the terminal device may determine that the second information takes effect after the first nominal TDW. In this case, the first nominal TDW may be ensured to remain unchanged, that is, the first nominal TDW does not end in advance. This can ensure performance of joint channel estimation in the first nominal TDW. That the second information takes effect after the first nominal TDW may also be considered that the second information lasts until an end moment of the current actual TDW. For example, the second information lasts until all overlapping of current transmissions ends. For another example, the second information lasts until all transmissions corresponding to current TBoMS end. Optionally, regardless of whether the terminal device changes from enabling joint channel estimation to disabling joint channel estimation, after receiving the second RRC signaling, the terminal device may determine that the second information takes effect after the first nominal TDW.

Example 3: The terminal device may determine that the second information takes effect after first preset duration after the second RRC signaling. For example, the second information takes effect at a moment at which the second RRC signaling is received, or the second information takes effect after the second RRC signaling is received. Before the effective time of the second information, the terminal device may use a configuration of the first RRC signaling. After the effective time of the second information, the terminal device may use a configuration of the second RRC signaling. Optionally, the first preset duration may be predefined, preconfigured, or indicated by the access network device. A length of the first preset duration is not limited. For example, a unit of the first preset duration may be a second, a millisecond, a microsecond, a slot, a symbol, a quantity of repetitions, or a length of a TDW. For example, the first preset duration may be a length of the current actual TDW, or may be a length of the current nominal TDW, or may be a length of the current transmission.

In a possible implementation, the access network device enables or disables joint channel estimation by using the RRC signaling, and an accumulated value of TPC commands is reset to 0.

Optionally, if the access network device configures a joint channel estimation enabling parameter, and the access network device makes, by using the RRC signaling, the terminal device to change from enabling joint channel estimation to disabling joint channel estimation, the accumulated value of the TPC commands is reset to 0. It may also be understood that joint channel estimation changes from an enabled state to a disabled state, and the accumulated value of the TPC commands is reset to 0. For example, at the effective location of the second information, the accumulated value of the TPC commands is reset to 0. Optionally, when a transmit power adjustment value after the second information takes effect is calculated at the effective location of the second information, optionally, the accumulated value of the TPC commands before the effective time is inherited, and the joint channel estimation enabling parameter is carried in the RRC signaling.

In the procedure shown in FIG. 15, an example in which the terminal device changes from enabling joint channel estimation to disabling joint channel estimation is used. It may be understood that the terminal device may alternatively change from disabling joint channel estimation to enabling joint channel estimation. If a start location is determined for each transmission in each nominal TDW, that the terminal device uses signaling after receiving the signaling for enabling joint channel estimation may result in a case in which joint channel estimation cannot be performed.

Therefore, a fourth communication method provided in embodiments of this application is provided. FIG. 16 is a schematic flowchart of a fourth communication method according to an embodiment of this application. The fourth communication method is applicable to the network structure shown in FIG. 1. The following uses an example in which the fourth communication method is performed by using an access network device and a terminal device.

S1601: The access network device sends third RRC signaling to the terminal device, and correspondingly, the terminal device receives the third RRC signaling, where the third RRC signaling includes third information, and the third information is used to disable the terminal device from performing joint channel estimation.

After receiving the third RRC signaling, the terminal device may perform an uplink transmission based on the third information. For example, the terminal device may perform a first uplink transmission. It should be noted that the access network device may also indicate, by using RRC signaling that does not include a higher-layer parameter PUSCH-DMRS-Bundling or PUCCH-DMRS-Bundling, to disable the terminal device from performing joint channel estimation. That is, when the higher-layer parameter PUSCH-DMRS-Bundling or PUCCH-DMRS-Bundling is not provided, joint channel estimation is not enabled/disabled by default. In other words, the third RRC signaling sent by the access network device to the terminal device may not include the third information. After receiving the third RRC signaling, the terminal device may disable, by default, the terminal device from performing joint channel estimation.

S1602: The access network device sends fourth RRC signaling to the terminal device, and correspondingly, the terminal device receives the fourth RRC signaling, where the fourth RRC signaling includes fourth information, and the fourth information is used to enable the terminal device to perform joint channel estimation.

The access network device may change an enabling state of joint channel estimation by using the RRC signaling. For example, the third RRC signaling is used to disable the terminal device from performing joint channel estimation, and the fourth RRC signaling is used to enable the terminal device from performing joint channel estimation. After receiving the fourth RRC signaling, the terminal device may determine a nominal TDW. If a start location is determined for each transmission in each nominal TDW, joint channel estimation enabled in effect between a plurality of transmissions may result in a failure to implement joint channel estimation. Therefore, the terminal device does not expect, within one transmission, the terminal device to change from disabling joint channel estimation to enabling joint channel estimation. It may also be understood that it is expected, required, or specified that the access network device does not configure, within one transmission, the terminal device to change from disabling joint channel estimation to enabling joint channel estimation. The access network device does not configure, within one transmission, the terminal device to change from disabling joint channel estimation to enabling joint channel estimation.

S1603: The terminal device determines effective time of the fourth information and/or an end location of the nominal TDW.

When the terminal device changes from disabling joint channel estimation to enabling joint channel estimation, the terminal device may determine the effective time of the fourth information, that is, the terminal device determines when to use the fourth information. It may be understood that, that the fourth information takes effect may also be considered that joint channel estimation is enabled to take effect, that is, joint channel estimation is enabled after the effective time of the fourth information. The terminal device may alternatively determine the end location of the nominal TDW, to ensure that the actual TDW in the nominal TDW meets joint channel estimation. Possible effective time of the fourth information and a possible end location of the nominal TDW are described below by using specific examples.

Example 1: The terminal device may determine that the effective time of the fourth information is effective time of the fourth RRC signaling. In this case, it may be considered that the terminal device determines, when receiving the fourth RRC signaling, to enable joint channel estimation. The terminal device may use an effective location of the fourth RRC signaling as a start location of a first nominal TDW. This ensures transmit power consistency and phase continuity of the terminal device to be maintained from a first transmission occasion of the first nominal TDW, that is, ensures performance of joint channel estimation performed by the terminal device. Optionally, the first nominal TDW starts from a first physical slot or a first available slot for a transmission after the fourth RRC signaling takes effect.

Example 2: The fourth information takes effect after the terminal device ends a previous uplink transmission. That is, a nominal TDW is re-determined starting from a next uplink transmission. This can ensure that a status of joint channel estimation performed by the terminal device in the previous uplink transmission does not change.

Example 3: The terminal device may determine that the fourth information takes effect after second preset duration after the fourth RRC signaling. It may also be understood that the fourth information is delayed to take effect. Before the effective time of the fourth information, the terminal device may use a configuration of the third RRC signaling. After the effective time of the fourth information, the terminal device may use a configuration of the fourth RRC signaling. Optionally, the second preset duration may be predefined, preconfigured, or indicated by the access network device. A length of the second preset duration is not limited. For example, a unit of the second preset duration may be a second, a millisecond, a microsecond, a slot, a symbol, a quantity of repetitions, or a length of a TDW. For example, the second preset duration may be a length of the current actual TDW, or may be a length of the current nominal TDW, or may be a length of the current transmission.

In a possible implementation, the access network device enables or disables joint channel estimation by using the RRC signaling, and an accumulated value of TPC commands is reset to 0.

Optionally, if the access network device configures a joint channel estimation enabling parameter, and the access network device makes, by using the RRC signaling, the terminal device to change from disabling joint channel estimation to enabling joint channel estimation, the accumulated value of the TPC commands is reset to 0. It may also be understood that joint channel estimation changes from a disabled state to an enabled state, and the accumulated value of the TPC commands is reset to 0. For example, at the effective location of the fourth information, the accumulated value of the TPC commands is reset to 0. Optionally, when a transmit power adjustment value after the fourth information takes effect is calculated at the effective location of the fourth information, the accumulated value of the TPC commands before the effective time is inherited. Optionally, the joint channel estimation enabling parameter is carried in RRC signaling.

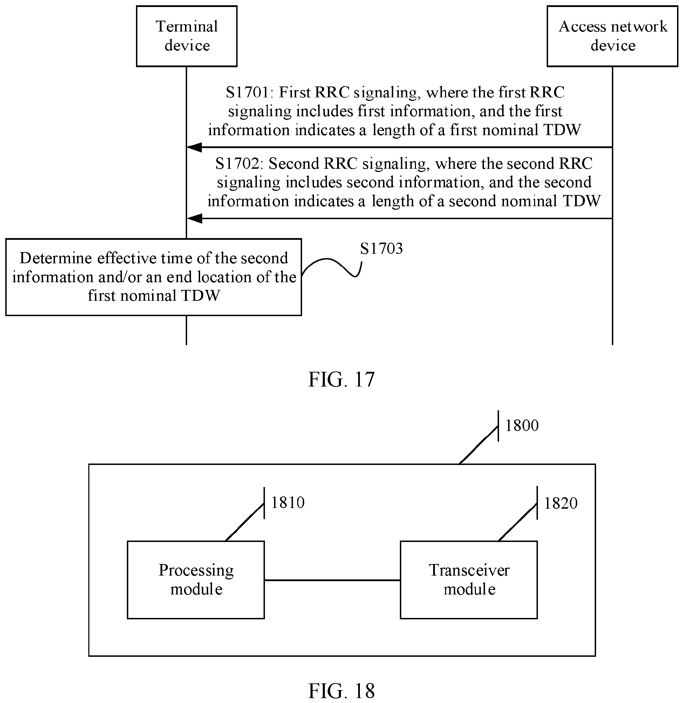

It may be understood that nominal TDWs configured by the access network device for the terminal device twice consecutively may also change. In this case, an actual TDW in one nominal TDW may not meet joint channel estimation. Therefore, a fifth communication method in embodiments of this application is provided. FIG. 17 is a schematic flowchart of a fifth communication method according to an embodiment of this application. The fifth communication method is applicable to the network structure shown in FIG. 1. The following uses an example in which the fifth communication method is performed by using an access network device and a terminal device.

S1701: The access network device sends first RRC signaling to the terminal device, and correspondingly, the terminal device receives the first RRC signaling, where the first RRC signaling includes first information, and the first information indicates a length of a first nominal TDW.

After receiving the first RRC signaling, the terminal device may determine a first nominal TDW based on the first information. For how the terminal device determines the first nominal TDW, refer to related content in S901. Details are not described herein again.

S1702: The access network device sends second RRC signaling to the terminal device, and correspondingly, the terminal device receives the second RRC signaling, where the second RRC signaling includes second information, and the second information indicates a length of a second nominal TDW.

The access network device may reconfigure a length of a nominal TDW by using RRC signaling. For example, the length of the first nominal TDW configured by using the first RRC signaling is L1, and the length of the second nominal TDW configured by using the second RRC signaling is L2. If L2 is not equal to L1, and the access network device enables the terminal device to perform joint channel estimation; and if the second RRC signaling takes effect in the first nominal TDW, transmit power consistency and phase continuity may not be maintained in the first nominal TDW. Consequently, an actual TDW in the first nominal TDW cannot meet joint channel estimation. Therefore, the terminal device does not expect, without changing an enabling state of joint channel estimation performed by the terminal device, the length of the nominal TDW to change. It may also be understood that, without changing the enabling state of joint channel estimation performed by the terminal device, it is expected that the access network device does not configure nominal TDWs of different lengths, and RRC signaling corresponding to a configured nominal TDW takes effect in another nominal TDW.

S1703: The terminal device determines effective time of the second information and/or an end location of the first nominal TDW.

When the length of the second nominal TDW configured by the access network device by using the second RRC signaling is different from the length of the first nominal TDW, the terminal device may determine the effective time of the second information, that is, the terminal device determines when to use the second information. The effective time of the second information may also be considered as effective time of the window length of the second nominal TDW. To be specific, the second nominal TDW is determined based on the second information and a second uplink transmission after an effective moment of the window length of the second nominal TDW. The terminal device may alternatively determine the end location of the first nominal TDW, to ensure that the actual TDW in the first nominal TDW meets joint channel estimation. Possible effective time of the second information and a possible end location of the first nominal TDW are described below by using specific examples.

Example 1: The terminal device may determine that the effective time of the second information is effective time of the second RRC signaling. It may be understood that the terminal device receives the second RRC signaling, and ends the first nominal TDW in advance. For example, the first nominal TDW ends at an effective location of the second RRC signaling. This can ensure transmit power consistency and phase continuity of the terminal device to be maintained between a first transmission occasion in the first nominal TDW and the effective time of the second RRC signaling, that is, ensure performance of joint channel estimation performed by the terminal device. The terminal device re-determines a nominal TDW based on the second information at an effective location of the second information, that is, determines the second nominal TDW.

Example 2: The terminal device may also consider that the second information is an end event in the actual TDW, and the terminal device may determine that the second information takes effect after the first nominal TDW. In this case, the first nominal TDW may be ensured to remain unchanged, that is, the first nominal TDW does not end in advance. This can ensure performance of joint channel estimation in the first nominal TDW. Optionally, regardless of whether the length of the nominal TDW configured by the access network device changes, after receiving the second RRC signaling, the terminal device may determine that the second information takes effect after the first nominal TDW.

Example 3: The terminal device may determine that the second information takes effect after first preset duration after the second RRC signaling. It may also be understood that the second information is delayed to take effect. Before the effective time of the second information, the terminal device may use a configuration of the first RRC signaling. After the effective time of the second information, the terminal device may use a configuration of the second RRC signaling. This can avoid reducing performance of joint channel estimation due to inconsistent effective time of the second information. Optionally, the first preset duration may be predefined, preconfigured, or indicated by the access network device. A length of the first preset duration is not limited. For example, a unit of the first preset duration may be a second, a millisecond, a microsecond, a slot, a symbol, a quantity of repetitions, or a length of a TDW. For example, the first preset duration may be a length of the current actual TDW, or may be a length of the current nominal TDW, or may be a length of the current transmission.

In a possible implementation, the access network device reconfigures the length of the TDW by using an RRC signaling, and an accumulated value of TPC commands is reset to 0.

Optionally, the access network device reconfigures the length of the TDW by using the RRC signaling configuration, and the access network device changes the length of the nominal TDW by using the RRC signaling. After an effective moment of the reconfigured nominal TDW, an accumulated value of TPC commands is reset to 0. It may also be understood that the length of the nominal TDW changes, and the accumulated value of the TPC commands is reset to 0. For example, at the effective location of the second information, the accumulated value of the TPC commands is reset to 0. Optionally, when a transmit power adjustment value after the second information takes effect is calculated at the effective location of the second information, the accumulated value of the TPC commands before the effective time is inherited.

It should be noted that any multiple embodiments in embodiments shown in FIG. 9, FIG. 12, and FIG. 15 to FIG. 17 may be combined with each other.

Embodiments provided in this application separately describe the method provided in embodiments of this application from a perspective of interaction between the terminal device and the access network device. To implement functions in the methods provided in the foregoing embodiments of this application, the terminal device and the access network device may include a hardware structure and/or a software module, to implement the foregoing functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

Based on a same concept as the method embodiments, an embodiment of this application provides a communication apparatus. The following describes, with reference to the accompanying drawings, communication apparatuses configured to implement the foregoing methods in embodiments of this application.

FIG. 18 is a block diagram of a communication apparatus 1800 according to an embodiment of this application. The communication apparatus 1800 may include a processing module 1810 and a transceiver module 1820. Optionally, a storage unit may be included. The storage unit may be configured to store instructions (code or a program) and/or data. The processing module 1810 and the transceiver module 1820 may be coupled to the storage unit. For example, the processing module 1810 may read the instructions (the code or the program) and/or the data in the storage unit, to implement a corresponding method. The foregoing modules may be disposed independently, or may be partially or totally integrated.

In some possible implementations, the communication apparatus 1800 can correspondingly implement behavior and functions of the terminal device in the foregoing method embodiments. The communication apparatus 1800 may be a terminal device, or may be a component (for example, a chip or a circuit) used in the terminal device, or may be a chip or a chip group in the terminal device, or a part of a chip that is configured to perform a related method function. In some other possible implementations, the communication apparatus 1800 can correspondingly implement behavior and functions of the access network device in the foregoing method embodiments. The communication apparatus 1800 may be an access network device, or may be a component (for example, a chip or a circuit) used in the access network device, or may be a chip or a chip group in the access network device, or a part of a chip that is configured to perform a related method function.

For example, the communication apparatus 1800 implements the method performed by the terminal device in the embodiment in FIG. 9. The transceiver module 1820 is configured to receive first information, where the first information is used to enable the communication apparatus 1800 to perform joint channel estimation. The processing module 1810 is configured to: determine a first transmit power adjustment value for a first uplink transmission in a first TDW based on a first power control loop, and determine a second transmit power adjustment value for a second uplink transmission in a second TDW based on a second power control loop, where the first TDW and the second TDW partially or fully overlap, and the first power control loop and the second power control loop are different.

For another example, the communication apparatus 1800 implements the method performed by the terminal device in the embodiment in FIG. 12, and the transceiver module 1820 and the processing module 1810 may be configured to implement the following functions.

In an optional implementation, the transceiver module 1820 is configured to receive first information and second information, where the first information is used to enable the communication apparatus 1800 to perform joint channel estimation, and the second information includes a TPC command. The processing module 1810 is configured to determine to use the TPC command after a first moment. The first moment is an end moment of a latest end TDW in a first TDW and a second TDW. The first TDW and the second TDW partially or fully overlap, the first TDW corresponds to a first uplink transmission, and the second TDW corresponds to a second uplink transmission.

Optionally, the TPC command is received between a second moment and a third moment. The second moment is located before a first transmission occasion in the first TDW and the second TDW, and is separated from the first transmission occasion by first preset duration. The third moment is located before a last transmission occasion in the first TDW and the second TDW, and is separated from a last transmission occasion by second preset duration.

In an optional implementation, the transceiver module 1820 is configured to receive first information and second information, where the first information is used to enable the communication apparatus 1800 to perform joint channel estimation, and the second information includes a TPC command. The processing module 1810 is configured to determine to use the TPC command after a first moment. The first moment is a start moment at which a first TDW and a second TDW overlap, and the first TDW and the second TDW partially or fully overlap. The first TDW corresponds to a first uplink transmission, and the second TDW corresponds to a second uplink transmission; and the first uplink transmission ends at a second moment, and the second moment is a start moment of the second uplink transmission.

Optionally, the TPC command is received between a third moment and a fourth moment. The third moment is located before a first transmission occasion in the first TDW, and is separated from the first transmission occasion by first preset duration. The fourth moment is located before a last transmission occasion before the second moment, and is separated from the last transmission occasion by second preset duration.

Optionally, the first uplink transmission and the second uplink transmission correspond to a same power control loop, and the processing module 1810 is configured to determine to use the TPC command after the first moment.

For another example, the communication apparatus 1800 implements the method performed by the terminal device in the embodiment in FIG. 13. The transceiver module 1820 is configured to receive first information, where the first information is used to enable the communication apparatus 1800 to perform joint channel estimation. The processing module 1810 is configured to: determine a first transmit power adjustment value for a first uplink transmission in a first TDW based on a first power control loop, and determine a second transmit power adjustment value for a second uplink transmission in the first TDW based on a second power control loop. The first power control loop and the second power control loop are different.

For example, the communication apparatus 1800 implements the method performed by the terminal device in the embodiment in FIG. 14. The transceiver module 1820 is configured to receive first information and second information, where the first information is used to enable the communication apparatus 1800 to perform joint channel estimation, and the second information includes a first TPC command. The processing module 1810 is configured to determine, according to a first rule, a first transmit power adjustment value for a first uplink transmission in a first TDW, a second transmit power adjustment value for a second uplink transmission in the first TDW, and a third transmit power adjustment value after the first TDW. The first rule is as follows: In the first TDW, transmit power adjustment values of transmission occasions before a first transmission occasion of the second uplink transmission are equal; or in the first TDW, transmit power adjustment values of a first transmission occasion of the second uplink transmission and transmission occasions after the first transmission occasion are determined according to the first TPC command and/or a second TPC command received in a first time domain range. The third transmit power adjustment value is determined according to the first TPC command and/or a second TPC command received in a second time domain range. The first time domain range is a time domain range from first preset duration before the first transmission occasion in the first TDW to second preset duration before the first transmission occasion of the second uplink transmission. The second time domain range is a time domain range from the second preset duration before the first transmission occasion of the second uplink transmission to third preset duration before a transmission occasion after the first TDW.

For example, the communication apparatus 1800 implements the method performed by the terminal device in the embodiment in FIG. 14. The transceiver module 1820 is configured to receive first information and second information, where the first information is used to enable the communication apparatus 1800 to perform joint channel estimation, and the second information includes a first TPC command. The processing module 1810 is configured to determine, according to a second rule, a first transmit power adjustment value for a first uplink transmission in a first TDW, a second transmit power adjustment value for a second uplink transmission in the first TDW, and a third transmit power adjustment value after the first TDW. The second rule is as follows: In the first TDW, transmit power adjustment values of transmission occasions before a first transmission occasion of the second uplink transmission are equal; or in the first TDW, transmit power adjustment values of a first transmission occasion of the second uplink transmission and transmission occasions after the first transmission occasion are determined according to the first TPC command, where the first TPC command is a UE-specific TPC command associated with the second uplink transmission. The third transmit power adjustment value is determined according to the first TPC command, where the first TPC command is a last TPC command belonging to a transmission occasion in the first TDW.

Optionally, the first uplink transmission and the second uplink transmission correspond to a same power control loop, and the processing module 1810 determines one or more of the first transmit power control adjustment value, the second transmit power adjustment value, and the third transmit power adjustment value according to a first rule or the second rule.

Optionally, for a physical downlink shared channel, if accumulation of TPC commands is configured, the processing module 1810 determines one or more of the first transmit power control adjustment value, the second transmit power adjustment value, and the third transmit power adjustment value according to the first rule. For a physical downlink control channel, the processing module 1810 determines one or more of the first transmit power control adjustment value, the second transmit power adjustment value, and the third transmit power adjustment value according to the first rule.

In a possible implementation of the ninth aspect, for a physical downlink shared channel, if cumulation of TPC commands is not configured, the processing module 1810 determines one or more of the first transmit power control adjustment value, the second transmit power adjustment value, and the third transmit power adjustment value according to the second rule.

For another example, the communication apparatus 1800 implements the method performed by the terminal device in the embodiment in FIG. 15. The transceiver module 1820 is configured to receive first RRC signaling, where the first RRC signaling includes first information, and the first information is used to enable the communication apparatus 1800 to perform joint channel estimation. The transceiver module 1820 is further configured to receive second RRC signaling, where the second RRC signaling includes second information, and the second information is used to disable the communication apparatus 1800 to perform joint channel estimation. The processing module 1810 is configured to: determine a first nominal TDW based on the first information, and determine effective time of the second information and/or an end location of the first nominal TDW. Effective time of the second RRC signaling is within the first nominal TDW.

Optionally, the second information is used to disable the communication apparatus 1800 from performing joint channel estimation, that is, the communication apparatus 1800 changes from enabling joint channel estimation to disabling joint channel estimation. This meets any one of the following: The effective time of the second information is the effective time of the second RRC signaling; or the second information takes effect after the first nominal TDW ends, and the second RRC signaling is an end event in an actual time domain window; or the second information takes effect after first preset duration after the second RRC signaling.

For another example, the communication apparatus 1800 implements the method performed by the terminal device in the embodiment in FIG. 16. The transceiver module 1820 is configured to receive third RRC signaling, where the third RRC signaling includes third information, and the third information is used to disable the communication apparatus 1800 from performing joint channel estimation. The transceiver module 1820 is further configured to receive fourth RRC signaling, where the fourth RRC signaling includes fourth information, and the fourth information is used to enable the communication apparatus 1800 to perform joint channel estimation. The processing module 1810 is configured to determine a first nominal TDW based on the third RRC signaling, and determine a start location of the nominal TDW and/or effective time of the fourth information. Effective time of the fourth RRC signaling is within the first nominal TDW.

Optionally, the start location of the nominal TDW is the effective time of the fourth RRC signaling; or the start location of the nominal TDW is an end location of third preset duration after the fourth RRC signaling.

Optionally, at an effective location of the fourth RRC signaling, an accumulated value of TPC commands is reset to 0.

For another example, the communication apparatus 1800 implements the method performed by the terminal device in the embodiment in FIG. 17. The transceiver module 1820 is configured to receive first RRC signaling, where the first RRC signaling includes first information, and the first information is used to enable the communication apparatus 1800 to perform joint channel estimation. The transceiver module 1820 is further configured to receive second RRC signaling, where the second RRC signaling includes second information, and the second information indicates a length of a second nominal TDW. The processing module 1810 is configured to: determine a first nominal TDW based on the first information, and determine effective time of the second information and/or an end location of the first nominal TDW. Effective time of the second RRC signaling is within the first nominal TDW.

Optionally, the length of the second nominal TDW indicated by the second information is different from a length of the first nominal TDW, and any one of the following is met: the second information takes effect after second preset duration after the second RRC signaling; or the effective time of the second information is the effective time of the second RRC signaling.

Optionally, at an effective location of the second RRC signaling, an accumulated value of TPC commands is reset to 0.

For another example, the transceiver module 1820 may be configured to receive first information, where the first information is used to enable the communication apparatus 1800 to perform joint channel estimation. The processing module 1810 is configured to determine that a first TDW ends on a previous symbol of a first event. The first TDW is for joint channel estimation. The first event may include: droppings of some transmissions or a cancellation of a transmission of uplink transmissions in the first TDW due to a processing conflict. Optionally, a symbol for the uplink transmission in the first TDW overlaps a symbol for a downlink transmission. For another example, an overlapping of a gap (gap) between two uplink transmissions in the first TDW and a symbol for a downlink transmission is included. Optionally, when there is the overlapping of the gap (gap) between the two uplink transmissions in the first TDW and the symbol for the downlink transmission, a symbol for the uplink transmission does not overlap the symbol for the downlink transmission. It may be understood that the first TDW may alternatively end at a last symbol of the uplink transmission before the first event.

Optionally, the uplink transmission includes one or more of the following transmissions: a physical uplink control channel repetition, a physical uplink shared channel repetition, one transmission block transmission over multiple slots, or one transmission block transmission over multiple slots repetition, where the physical uplink shared channel repetition includes a repetition type A and/or a repetition type B.

Optionally, the downlink transmission includes downlink reception, and/or the downlink transmission includes downlink monitoring.

Optionally, the downlink monitoring includes one or more of monitoring a synchronization signal, monitoring a control information resource set, or monitoring physical downlink control channel search space.

Optionally, the downlink reception includes receiving one or more of a physical downlink shared channel, a physical downlink control channel, or a downlink reference signal.

Optionally, a duplex manner of the communication apparatus 1800 is half-duplex frequency division duplex.

In a possible implementation, the transceiver module 1820 is configured to receive first information and second information, where the first information is used to enable the terminal device to perform joint channel estimation, and the second information carries a TPC command. If the communication apparatus 1800 has a capability of supporting restarting a TDW, the processing module 1810 is configured to determine that a first time domain window TDW ends on a symbol before a first event, where the first TDW is for joint channel estimation. If the communication apparatus 1800 does not have a capability of restarting a TDW, the processing module 1810 is configured to use the TPC command after determining a first TDW, where the first TDW is for joint channel estimation.

In a possible implementation, the transceiver module 1820 is configured to receive first information, where the first information is used to enable the terminal device to perform joint channel estimation. The processing module 1810 is configured to determine a transmit power adjustment value at a first transmission occasion in a first TDW and/or a transmit power adjustment value at a second transmission occasion after the first time domain window based on a first power control adjustment value and a second power control adjustment value. The first TDW is for joint channel estimation. The first power control adjustment value is a power adjustment value corresponding to a first TPC command, the second power control adjustment value is a power adjustment value corresponding to a second TPC command, the first TPC command is a TPC command for all terminal devices, and the second TPC command is a TPC command for a specific terminal device.

Optionally, a first power control adjustment value at the second transmission occasion is $f_i^1 = f_{i_1}^1 + \sum \delta_i$, $f_{i_1}^1$ is a power adjustment value at a start transmission occasion in the first TDW, $\sum \delta_i$ is a sum of transmit power adjustment values corresponding to TPC commands received in a third time domain range, and the third time domain range is a time domain range from first preset duration before a first symbol in the first TDW to second preset duration before the second transmission occasion.

Optionally, the first power adjustment value at the first transmission occasion is equal to a first power adjustment value at a start transmission occasion in the first TDW in which the first transmission occasion is located.

Optionally, the first transmission occasion and the start transmission occasion in the first TDW in which the first transmission occasion is located are different transmission occasions.

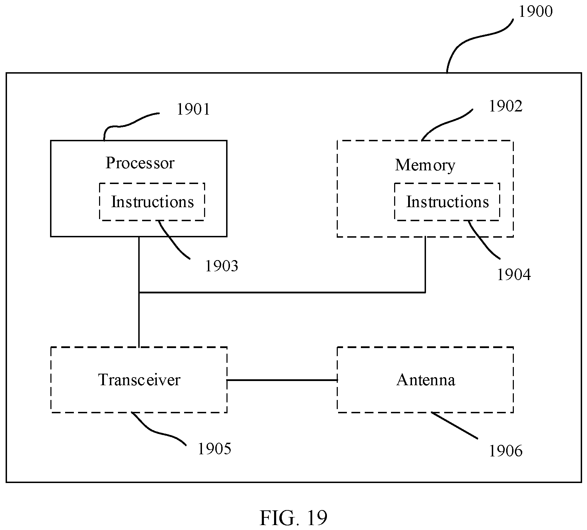

FIG. 19 is a block diagram of a communication apparatus 1900 according to an embodiment of this application. The communication apparatus 1900 may be a terminal device, and can implement the function of the terminal device in the method provided in embodiments of this application. Alternatively, the communication apparatus 1900 may be an apparatus that can support the terminal device to implement a corresponding function in the method provided in embodiments of this application. The communication apparatus 1900 may be a chip system. In this embodiment of this application, the chip system may include a chip, or may include a chip and another discrete component. For a specific function, refer to the descriptions in the foregoing method embodiments. Alternatively, the communication apparatus 1900 may be an access network device, and can implement the function of the access network device in the method provided in embodiments of this application. Alternatively, the communication apparatus 1900 may be an apparatus that can support the access network device to implement a corresponding function in the method provided in embodiments of this application. The communication apparatus 1900 may be a chip system. In this embodiment of this application, the chip system may include a chip, or may include a chip and another discrete component. For a specific function, refer to the descriptions in the foregoing method embodiments.

The communication apparatus 1900 includes one or more processors 1901 that may be configured to implement or support the communication apparatus 1900 to implement functions of the terminal device in the method provided in embodiments of this application. For details, refer to the detailed descriptions in the method examples. Details are not described herein again. The one or more processors 1901 may alternatively be configured to implement or support the communication apparatus 1900 to implement the functions of the access network device in the method provided in embodiments of this application. For details, refer to the detailed descriptions in the method examples. Details are not described herein again. The processor 1901 may also be referred to as a processing unit or a processing module, and may implement a specific control function. The processor 1901 may be a general-purpose processor, a dedicated processor, or the like. For example, the processor includes a central processing unit, an application processor, a modem processor, a graphics processor, an image signal processor, a digital signal processor, a video codec processor, a controller, a memory, and/or a neural network processor. The central processing unit may be configured to control the communication apparatus 1900, execute a software program, and/or process data. Different processors may be independent components, or may be integrated into one or more processors, for example, integrated into one or more application-specific integrated circuits.

Optionally, the communication apparatus 1900 includes one or more memories 1902, configured to store instructions 1904. The instructions may be run on the processor 1901, so that the communication apparatus 1900 performs the method described in the foregoing method embodiments. The memory 1902 and the processor 1901 may be separately disposed, or may be integrated, or it may be considered that the memory 1902 and the processor 1901 are coupled. A coupling in embodiments of this application may be an indirect coupling or a communication connection between apparatuses, units, or modules in an electrical form, a mechanical form, or another form, and is for information exchange between the apparatuses, the units, or the modules. The processor 1901 and the memory 1902 may cooperatively operate. At least one of the at least one memory may be included in the processor. It should be noted that the memory 1902 is not necessary, and therefore, is illustrated by using a dashed line in FIG. 19.

Optionally, the memory 1902 may further store data. The processor and the memory may be separately disposed, or may be integrated together. In embodiments of this application, the memory 1902 may be a non-volatile memory, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1900 may include instructions 1903 (which may also be referred to as code or a program sometimes). The instructions 1903 may be run on the processor, so that the communication apparatus 1900 performs the methods described in the foregoing embodiments. The processor 1901 may store data.

Optionally, the communication apparatus 1900 may further include a transceiver 1905 and an antenna 1906. The transceiver 1905 may be referred to as a transceiver unit, a transceiver module, a transceiver machine, a transceiver circuit, a transceiver, an input/output interface, or the like, and is configured to implement a transceiver function of the communication apparatus 1900 through the antenna 1906.

The processor 1901 and the transceiver 1905 described in this application may be implemented in an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1900 may include more or fewer components, or some components are integrated, or some components are split. These components may be implemented by hardware, software, or a combination of software and hardware.

It should be noted that the communication apparatus in the foregoing embodiments may be a terminal device (or a network device), may be a circuit, may be a chip used in a terminal device (or a network device), or may be another combined device, component, or the like that has a function of a terminal (or a network device). When the communication apparatus is the terminal device (or the network device), the transceiver module may be the transceiver, and may include the antenna, a radio frequency circuit, and the like, and the processing module may be the processor, for example, a central processing module (central processing unit, CPU). When the communication apparatus is a component having a function of the terminal device (or the network device), the transceiver module may be a radio frequency unit, and the processing module may be the processor. When the communication apparatus is the chip system, the communication apparatus may be a field programmable gate array (field programmable gate array, FPGA), an application-specific integrated circuit (application-specific integrated circuit, ASIC), a system-on-a-chip (system-on-a-chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first terminal device and at least one second device, or may further include at least one access network device and/or a core network device. For example, the communication system includes an access network device and a terminal device that are configured to implement related functions in FIG. 9, FIG. 12, FIG. 15, FIG. 16, or FIG. 17. For details, refer to the related descriptions in the method embodiments. Details are not described herein again.

An embodiment of this application further provides a computer-readable storage medium, including instructions. When the instructions are run on a computer, the computer is enabled to perform the method performed by the access network device in FIG. 9, FIG. 12, FIG. 15, FIG. 16, or FIG. 17. Alternatively, when the instructions are run on a computer, the computer is enabled to perform the method performed by the terminal device in FIG. 9, FIG. 12, FIG. 15, FIG. 16, or FIG. 17.

An embodiment of this application further provides a computer program product, including instructions. When the computer program product runs on a computer, the computer is enabled to perform the method performed by the access network device in FIG. 9, FIG. 12, FIG. 15, FIG. 16, or FIG. 17. Alternatively, when the computer program product runs on a computer, the computer is enabled to perform the method performed by the terminal device in FIG. 9, FIG. 12, FIG. 15, FIG. 16, or FIG. 17.

An embodiment of this application provides a chip system. The chip system includes a processor, and may further include a memory, configured to implement the function of the first device in the foregoing method, or configured to implement the function of the second device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software function unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art may make various modifications and variations to this application. If these modifications and variations of this application fall within the scope of the claims of this application and equivalent technologies thereof, this application is also intended to cover these modifications and variations.

**Claims**

1. A communication method, comprising:

   receiving, by a terminal device, first information, wherein the first information is used to enable the terminal device to perform DMRS bundling, and the terminal device is a half-duplex terminal device in paired spectrum; and
   determining, by the terminal device, that an actual time domain window TDW in a nominal time domain window TDW ends on a last symbol for an uplink transmission before a first event, wherein the nominal TDW is for DMRS bundling, the first event is an event that causes power consistency and phase continuity not to be maintained, and the first event comprises one or more of the following:

   a dropping or cancellation of an uplink transmission within the nominal TDW due to a conflict rule; or
   an overlapping of a gap gap between two consecutive uplink transmissions within the nominal TDW and a symbol for a downlink transmission.

2. The method according to claim 1, wherein when there is the dropping or cancellation of the uplink transmission within the nominal TDW due to the conflict rule, a symbol for the uplink transmission overlaps a symbol for a downlink transmission.

3. The method according to claim 1, wherein when there is the overlapping of the gap gap between the two consecutive uplink transmissions within the nominal TDW and the symbol for the downlink transmission, a symbol for the uplink transmission does not overlap the symbol for the downlink transmission.

4. The method according to any one of claims 1 to 3, wherein the downlink transmission comprises downlink reception and/or the downlink transmission comprises downlink monitoring.

5. The method according to claim 4, wherein the downlink monitoring comprises one or more of monitoring a synchronization signal, monitoring a control information resource set, or monitoring physical downlink control channel search space.

6. The method according to claim 4, wherein the downlink reception comprises receiving one or more of a physical downlink shared channel, a physical downlink control channel, or a downlink reference signal.

7. The method according to any one of claims 1 to 6, wherein the uplink transmission comprises one or more of the following transmissions: a PUSCH repetition type A, a PUSCH repetition type B, a PUCCH repetition, TB processing over multiple slots TBoMS, and a TBoMS repetition.

8. A communication method, comprising:

   sending, by an access network device, first information to a terminal device, wherein the first information is used to enable the terminal device to perform DMRS bundling, and the terminal device is a half-duplex terminal device in paired spectrum;
   determining, by the access network device, that an actual time domain window TDW in a nominal time domain window TDW ends on a last symbol for an uplink transmission before a first event, wherein the nominal TDW is for DMRS bundling, the first event is an event that causes power consistency and phase continuity not to be maintained, and the first event comprises one or more of the following:

   a dropping or cancellation of an uplink transmission within the nominal TDW due to a conflict rule; or
   an overlapping of a gap gap between two consecutive uplink transmissions within the nominal TDW and a symbol for a downlink transmission; and
   performing, by the access network device, DMRS bundling in the actual TDW.

9. The method according to claim 8, wherein the downlink transmission comprises downlink reception and/or the downlink transmission comprises downlink monitoring.

10. The method according to claim 8 or 9, wherein the uplink transmission comprises one or more of the following transmissions: a PUSCH repetition type A, a PUSCH repetition type B, a PUCCH repetition, TB processing over multiple slots TBoMS, and a TBoMS repetition.

11. A communication method, comprising:

receiving first information, wherein the first information is used to enable a terminal device to perform joint channel estimation; and
determining a first transmit power adjustment value for a first uplink transmission in a first time domain window TDW based on a first power control loop, and determining a second transmit power adjustment value for a second uplink transmission in a second TDW based on a second power control loop, wherein the first TDW and the second TDW partially or fully overlap, and the first power control loop and the second power control loop are different.

12. A communication method, comprising:

receiving first information, wherein the first information is used to enable a terminal device to perform joint channel estimation;
receiving second information, wherein the second information comprises a transmit power control TPC command; and
determining to use the TPC command after a first moment, wherein the first moment is an end moment of a latest end TDW in a first time domain window TDW and a second TDW, the first TDW and the second TDW partially or fully overlap, the first TDW corresponds to a first uplink transmission, and the second TDW corresponds to a second uplink transmission.

13. The method according to claim 12, wherein the TPC command is received between a second moment and a third moment, the second moment is located before a first transmission occasion in the first TDW and the second TDW, and is separated from the first transmission occasion by first preset duration, the third moment is located before a last transmission occasion in the first TDW and the second TDW, and is separated from the last transmission occasion by second preset duration.

14. A communication method, comprising:

receiving first information, wherein the first information is used to enable a terminal device to perform joint channel estimation;
receiving second information, wherein the second information comprises a transmit power control TPC command; and
determining to use the TPC command after a first moment, wherein the first moment is a start moment at which a first time domain window TDW and a second TDW overlap, the first TDW and the second TDW partially or fully overlap, the first TDW corresponds to a first uplink transmission, the second TDW corresponds to a second uplink transmission, the first uplink transmission ends at a second moment, and the second moment is a start moment of the second uplink transmission.

15. The method according to claim 14, wherein the TPC command is received between a third moment and a fourth moment, the third moment is located before a first transmission occasion in the first TDW, and is separated from the first transmission occasion by first preset duration, the fourth moment is located before a last transmission occasion before the second moment, and is separated from the last transmission occasion by second preset duration.

16. The method according to any one of claims 12 to 15, wherein the determining to use the TPC command after a first moment comprises: when the first uplink transmission and the second uplink transmission correspond to a same power control loop, determining to use the TPC command after the first moment.

17. A communication method, comprising:

receiving first information, wherein the first information is used to enable to perform joint channel estimation; and
determining a transmit power adjustment value at a first transmission occasion in a first time domain window TDW and/or a transmit power adjustment value at a second transmission occasion after the first time domain window based on a first power control adjustment value and a second power control adjustment value, wherein the first power control adjustment value is a power adjustment value corresponding to a first TPC command, the second power control adjustment value is a power adjustment value corresponding to a second TPC command, the first TPC command is a TPC command for all terminal devices, and the second TPC command is a TPC command for a specific terminal device.

18. The method according to claim 17, wherein the first power control adjustment value at the second transmission occasion $f_i^1 = f_{i_1}^1 + \sum \delta_i$, $f_{i_1}^1$ is a power adjustment value at a start transmission occasion in the first TDW, $\sum \delta_i$ is a sum of transmit power adjustment values corresponding to TPC commands received in a third time domain range, and the third time domain range is a time domain range from first preset duration before a first symbol in the first TDW to second preset duration before the second transmission occasion.

19. The method according to claim 17 or 18, wherein the first power adjustment value at the first transmission occasion is equal to a first power adjustment value at the start transmission occasion in the first TDW in which the first transmission occasion is located.

20. A communication apparatus, comprising a processing module and a transceiver module, wherein

the transceiver module is configured to receive first information, wherein the first information is used to enable the communication apparatus to perform DMRS bundling, and the communication apparatus is a half-duplex communication apparatus in paired spectrum; and
the processing module is configured to determine that an actual time domain window TDW in a nominal time domain window TDW ends on a last symbol for an uplink transmission before a first event, wherein the nominal TDW is for DMRS bundling, the first event is an event that causes power consistency and phase continuity not to be maintained, and the first event comprises one or more of the following:

a dropping or cancellation of an uplink transmission within the nominal TDW due to a conflict rule; or
an overlapping of a gap gap between two consecutive uplink transmissions within the nominal TDW and a symbol for a downlink transmission.

21. The communication apparatus according to claim 20, wherein when there is the dropping or cancellation of the uplink transmission within the nominal TDW due to the conflict rule, a symbol for the uplink transmission overlaps a symbol for a downlink transmission.

22. The communication apparatus according to claim 20, wherein when there is the overlapping of the gap gap between the two consecutive uplink transmissions within the nominal TDW and the symbol for the downlink transmission, a symbol for the uplink transmission does not overlap the symbol for the downlink transmission.

23. The communication apparatus according to any one of claims 20 to 22, wherein the downlink transmission comprises downlink reception and/or the downlink transmission comprises downlink monitoring.

24. The communication apparatus according to claim 23, wherein the downlink monitoring comprises one or more of monitoring a synchronization signal, monitoring a control information resource set, or monitoring physical downlink control channel search space.

25. The communication apparatus according to claim 23, wherein the downlink reception comprises receiving one or more of a physical downlink shared channel, a physical downlink control channel, or a downlink reference signal.

26. The communication apparatus according to any one of claims 20 to 25, wherein the uplink transmission comprises one or more of the following transmissions: a PUSCH repetition type A, a PUSCH repetition type B, a PUCCH repetition, TB processing over multiple slots TBoMS, and a TBoMS repetition.

27. A communication apparatus, comprising a processing module and a transceiver module, wherein

the transceiver module is configured to send first information to a terminal device, wherein the first information is used to enable the terminal device to perform DMRS bundling, and the terminal device is a half-duplex terminal device in paired spectrum;
the processing module is configured to determine that an actual time domain window TDW in a nominal time domain window TDW ends on a last symbol for an uplink transmission before a first event, wherein the nominal TDW is for DMRS bundling, the first event is an event that causes power consistency and phase continuity not to be maintained, and the first event comprises one or more of the following:

a dropping or cancellation of an uplink transmission within the nominal TDW due to a conflict rule; or
an overlapping of a gap gap between two consecutive uplink transmissions within the nominal TDW and a symbol for a downlink transmission; and
the processing module is further configured to perform DMRS bundling in the actual TDW.

28. The communication apparatus according to claim 27, wherein the downlink transmission comprises downlink reception and/or the downlink transmission comprises downlink monitoring.

29. The communication apparatus according to claim 27 or 28, wherein the uplink transmission comprises one or more of the following transmissions: a PUSCH repetition type A, a PUSCH repetition type B, a PUCCH repetition, TB processing over multiple slots TBoMS, and a TBoMS repetition.

30. A communication apparatus, comprising a processing module and a transceiver module, wherein

the transceiver module is configured to receive first information, wherein the first information is used to enable a terminal device to perform joint channel estimation; and
the processing module is configured to: determine a first transmit power adjustment value for a first uplink transmission in a first time domain window TDW based on a first power control loop, and determine a second transmit power adjustment value for a second uplink transmission in a second TDW based on a second power control loop, wherein the first TDW and the second TDW partially or fully overlap, and the first power control loop and the second power control loop are different.

31. A communication apparatus, comprising a processing module and a transceiver module, wherein

the transceiver module is configured to receive first information and second information, wherein the first information is used to enable a terminal device to perform joint channel estimation, and the second information comprises a transmit power control TPC command; and
the processing module is configured to determine to use the TPC command after a first moment, wherein the first moment is an end moment of a latest end TDW in a first time domain window TDW and a second TDW, the first TDW and the second TDW partially or fully overlap, the first TDW corresponds to a first uplink transmission, and the second TDW corresponds to a second uplink transmission.

32. The communication apparatus according to claim 31, wherein the TPC command is received between a second moment and a third moment, the second moment is located before a first transmission occasion in the first TDW and the second TDW, and is separated from the first transmission occasion by first preset duration, the third moment is located before a last transmission occasion in the first TDW and the second TDW, and is separated from the last transmission occasion by second preset duration.

33. A communication apparatus, comprising a processing module and a transceiver module, wherein

the transceiver module is configured to receive first information and second information, wherein the first information is used to enable a terminal device to perform joint channel estimation, and the second information comprises a transmit power control TPC command; and
the processing module is configured to determine to use the TPC command after a first moment, wherein the first moment is a start moment at which a first time domain window TDW and a second TDW overlap, the first TDW and the second TDW partially or fully overlap, the first TDW corresponds to a first uplink transmission, the second TDW corresponds to a second uplink transmission, the first uplink transmission ends at a second moment, and the second moment is a start moment of the second uplink transmission.

34. The communication apparatus according to claim 33, wherein the TPC command is received between a third moment and a fourth moment, the third moment is located before a first transmission occasion in the first TDW, and is separated from the first transmission occasion by first preset duration, the fourth moment is located before a last transmission occasion before the second moment, and is separated from the last transmission occasion by second preset duration.

35. The communication apparatus according to any one of claims 31 to 34, wherein the processing module is specifically configured to: when the first uplink transmission and the second uplink transmission correspond to a same power control loop, determine to use the TPC command at the first moment.

36. A communication apparatus, comprising a processing module and a transceiver module, wherein

the transceiver module is configured to receive first information, wherein the first information is used to enable to perform joint channel estimation; and
the processing module is configured to determine a transmit power adjustment value at a first transmission occasion in a first time domain window TDW and/or a transmit power adjustment value at a second transmission occasion after the first TDW based on a first power adjustment value and a second power adjustment value, wherein the first power adjustment value is a power adjustment value corresponding to a first TPC command, the second power adjustment value is a power adjustment value corresponding to a second TPC command, the first TPC command is a TPC command for all terminal devices, and the second TPC command is a TPC command for a specific terminal device.

37. The communication apparatus according to claim 36, wherein the first power control adjustment value at the second transmission occasion is $f_i^1 = f_{i_1}^1 + \sum \delta_i$, $f_{i_1}^1$ is a power adjustment value at a start transmission occasion in the first TDW, $\sum \delta_i$ is a sum of transmit power adjustment values corresponding to TPC commands received in a third time domain range, and the third time domain range is a time domain range from first preset duration before a first symbol in the first TDW to second preset duration before the second transmission occasion.

38. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 19 through a logic circuit or executing code instructions.

39. A computer-readable storage medium, wherein the computer-readable storage medium stores computer instructions, and when the computer instructions are executed, a computer is enabled to perform the method according to any one of claims 1 to 19.

Terminal
device

Access network
device

Core network
device

FIG. 1

| First nominal TDW | | | Second nominal TDW | | | Last nominal TDW | |

FIG. 2

Nominal TDW #1

Nominal TDW #2

(a)

Nominal TDW #1

Nominal TDW #2

(b)

First
transmission

Second
transmission

FIG. 3

Nominal TDW #1

Nominal TDW #2

(a)

Nominal TDW #1

Nominal TDW #2

(b)

First transmission    Second transmission

FIG. 4

Nominal TDW #1

×  ×  ×  ×

Nominal TDW #2

(a)

Nominal TDW #1

×  ×  ×  ×

Nominal TDW #2

(b)

First transmission          Second transmission

FIG. 5

Nominal TDW #1

×  ×

First transmission          Second transmission

FIG. 6

EP 4 462 925 A1

Nominal TDW #1

First transmission

Second transmission

FIG. 7

Nominal TDW #1

First transmission

Second transmission

FIG. 8

```
┌──────────┐                                              ┌──────────────┐
│ Terminal │                                              │Access network│
│  device  │                                              │    device    │
└────┬─────┘                                              └──────┬───────┘
     │         S901: First information, where the first         │
     │         information is used to enable the terminal        │
     │◄─────── device to perform joint channel estimation ──────│
     │                                                           │
```

┌──────────────────────────────────────────────┐
│     First solution: Determine a first transmit power    │        S902a
│ adjustment value for a first uplink transmission based  │
│ on a first power control loop, and determine a second   │
│ transmit power adjustment value for a second uplink     │
│  transmission based on a second power control loop      │
└──────────────────────────────────────────────┘

┌──────────────────────────────────────────────┐
│  Second solution: The terminal device determines to use a │        S902b
│ received TPC command after a first moment, where the first │
│   moment is an end moment of a latest end TDW in a first    │
│        nominal TDW and a second nominal TDW                 │
└──────────────────────────────────────────────┘

┌──────────────────────────────────────────────┐
│ Third solution: The terminal device determines to use a received │        S902c
│ TPC command after a first moment, where the first moment is a    │
│ start moment at which a first nominal TDW and a second nominal    │
│     TDW overlap, a first uplink transmission ends at a second     │
│   moment, and the second moment is a start moment of a second     │
│                       uplink transmission                         │
└──────────────────────────────────────────────┘

┌──────────────────────────────────────────────┐
│ Fourth solution: The terminal device determines to use a first TPC │
│  command after a first moment and use a second TPC command         │
│                    after a second moment                           │
└──────────────────────────────────────────────┘

FIG. 9

Moment t1
Moment 1
Moment t2
Moment t3
Moment 2
Moment 3
First nominal TDW
Second nominal TDW

(a)

Moment t1
Moment 1
Moment t2
Moment t3
Moment 2
Moment 3
First nominal TDW
Second nominal TDW

(b)

Moment t1
Moment 1
Moment t2
Moment 2
First nominal TDW
Second nominal TDW

(c)

First uplink transmission          Second uplink transmission

FIG. 10

(a)

(b)

First uplink transmission
Second uplink transmission

FIG. 11

Terminal device

Access network device

S1201: First information, where the first information is used to enable the terminal device to perform joint channel estimation

First solution: Determine a first transmit power adjustment value for a first uplink transmission based on a first power control loop, and determine a second transmit power adjustment value for a second uplink transmission based on a second power control loop

S1202a

Second solution: Determine, according to a first rule, a first transmit power adjustment value for a first uplink transmission in a first TDW, a second transmit power adjustment value for a second uplink transmission in the first TDW, and a third transmit power adjustment value after the first TDW

S1202b

Third solution: Determine, according to a second rule, a first transmit power adjustment value for a first uplink transmission in a first TDW, a second transmit power adjustment value for a second uplink transmission in the first TDW, and a third transmit power adjustment value after the first TDW

S1202c

FIG. 12

Moment t1

Moment 1

Moment t2

Moment 2

First TDW

❌ ❌

(a)

Moment t1

Moment 1

Moment t2

Moment 2

First TDW

(b)

Moment t1

Moment t2

Moment 1

Moment 2

First TDW

❌ ❌ ❌ ❌

(c)

First uplink transmission    Second uplink transmission

FIG. 13

Uplink frequency band

❌

$k^{th}$ symbol

Downlink frequency band

$k^{th}$ symbol
(downlink transmission)

FIG. 14

| Terminal device | | Access network device |
|---|---|---|

S1501: First RRC signaling, where the first RRC signaling includes first information, and the first information is used to enable the terminal device to perform joint channel estimation

S1502: Second RRC signaling, where the second RRC signaling includes second information, and the second information is used to disable the terminal device from performing joint channel estimation

Determine effective time of the second information and/or an end location of a first nominal TDW

S1503

FIG. 15

| Terminal device | | Access network device |
|---|---|---|

S1601: Third RRC signaling, where the third RRC signaling includes third information, and the third information is used to disable the terminal device from performing joint channel estimation

S1602: Fourth RRC signaling, where the fourth RRC signaling includes fourth information, and the fourth information is used to enable the terminal device to perform joint channel estimation

Determine effective time of the fourth information and/or an end location of a nominal TDW

S1603

FIG. 16

FIG. 17

FIG. 18

1900

1901

Processor

Instructions

1903

1902

Memory

Instructions

1904

Transceiver

1905

Antenna

1906

FIG. 19

**INTERNATIONAL SEARCH REPORT**

International application No.

**PCT/CN2023/071762**

### A. CLASSIFICATION OF SUBJECT MATTER

H04W 72/21(2023.01)i;H04L 25/02(2006.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP; VEN; CNABS; CNTXT; USTXT; EPTXT; WOTXT; CNKI: 联合信道估计, 解调参考信号, 绑定, 使能, 名义, 实际, 时域窗, 间隔, 破坏, 功率, 一致性, 相位, 连续性, 事件, 规则, 丢弃, 取消, 重叠, JCE, DMRS, bundling, enabl+, nominal, actual, TDW, gap, violate?, power, consistency, phase, continuity, event, rule, drop+, cancel+, overlap+

### C. DOCUMENTS CONSIDERED TO BE RELEVANT

| Category* | Citation of document, with indication, where appropriate, of the relevant passages | Relevant to claim No. |
|---|---|---|
| X | HUAWEI et al. "Discussion on Joint Channel Estimation for PUSCH" *3GPP TSG RAN WG1 Meeting #106bis-e R1-2108740*, 02 October 2021 (2021-10-02), sections 1-3 | 1-10, 20-29, 38, 39 |
| A | CN 113544996 A (BEIJING XIAOMI MOBILE SOFTWARE CO., LTD.) 22 October 2021 (2021-10-22) entire document | 1-39 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2023** | **28 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071762**

| Patent document cited in search report | | | Publication date (day/month/year) | Patent family member(s) | Publication date (day/month/year) |
|---|---|---|---|---|---|
| CN | 113544996 | A | 22 October 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210029081

- CN 202210130408